# EUROPEAN PATENT SPECIFICATION

(11) **EP 1 371 057 B1**
(45) Date of publication and mention of the grant of the patent: **09.11.2005**
(21) Application number: 02717055.4
(22) Date of filing: 12.03.2002
(51) Int. Cl.: G10L 15/26, G10L 13/04, H04M 3/493

(54) **METHOD FOR ENABLING THE VOICE INTERACTION WITH A WEB PAGE**
VERFAHREN ZUM ERMÖGLICHEN DER SPRACHINTERAKTION MIT EINER INTERNET-SEITE
PROCEDE PERMETTANT L'INTERACTION VOCALE D'UNE PAGE WEB OU D'UN SITE WEB

(30) Priority: 12.03.2001 IT RM20010126
(43) Date of publication of application: 17.12.2003
(73) Proprietor: Mediavoice S.r.l, I-00128 Roma (IT)
(72) Inventor: GIACOMELLI, Fabrizio, Mediavoice S.R.L., I-00128 Roma (IT)
(74) Representative: Taliercio, Antonio
(86) International application number: PCT/IT2002/000151
(87) International publication number: WO 2002/073599

(56) References cited:
- EP-A- 0 878 948
- WO-A-99/48088
- US-A- 5 818 423
- US-A- 5 915 001
- US-B1- 6 385 583

## Description

This invention relates to a method for enabling the voice interaction of a web page or a web site, comprising one or more web pages, the visualisation of each web page being defined by a corresponding visualisation document in electronic format, or file, the method being such that a user is enabled to interact also by uttering phrases, also in natural language, with an enabled web page which is requested by means of a user computer, or client, or by means of a telephone apparatus, the method according to this invention requiring no change of the web page visualisation files stored on the server. In this specification as well as in the claims, a preferably ordered juxtaposition of one or more words will be in any case designated by the term "phrase".

In particular, by using the method according to this invention, when a user computer or client requests an enabled web page, the user operating on said client will be enabled to select the commands for interaction with the page, as well as with usual electronic devices, such interaction being also a voice interaction.

This invention also relates to the instruments needed to practice the method as well as to the apparatus performing the method.

In the following description, the invention will be illustrated by mainly referring to a connection between a server computer, or simply server, and a client requesting a web page from the server, only by way of exemplification and not by way of limitation, since the invention can also be applied to a telephone connection between a server and a user telephone apparatus.

It is known that the voice technology is substantially comprised of two distinct and complementary technologies: the Voice Recognition or ASR (Automatic Speech Recognition) and the Voice Synthesis or TTS (Text to Speech).

The ASR technology allows the recognition of the user speech by a computer, provided with a microphone and with electronic audio devices and a suitable computer program or software. The audio electronic devices translates by the sounds of the uttered words reaching the microphone into electric signals that are construed by said software as corresponding character strings.

The TTS technology, on the other hand, consists of a contrary operation in which a computer provided with a suitable software, audio electronic devices and a loudspeaker perform a translation of the words of a text stored into sounds, into uttered words.

The software modules performing the voice recognition and voice synthesis operations are designated as vocal or voice engines. Therefore, voice recognition and voice synthesis engines exist.

The engines represent the lowest level layer in the voice software architecture, which also includes at least a voice application program, representing the highest level layer. An interface layer is needed to enable the interaction between the engines and the application program. At present, the most popular interface for voice application programs, such as to become a de facto standard, is an interface designated as SAPI (Speech Application Programming Interface) developed by Microsoft ®.

The technology for voice recognition and consequently the ASR engine are rather complex. In fact, the recognition of the uttered words is an extremely articulated operation comprising a statistical analysis of the signal coming from the microphone. Such an analysis requires a massive exploitation of the computer resources both at the processor and at the system memory levels. Two voice recognition types substantially exist: the recognition for dictation purposes.

The recognition for command and control purposes is the simplest one of the two voice recognition types and it entails a lower exploitation of the system resources. In this case, the user may utter only a restricted word assembly comprising some thousands words at the utmost. This voice recognition type is usually utilised for voice interaction with application software. In this case, the command assembly to be utilised in software management is certainly restricted and the concerned word can be voiced with said command and control recognition type. This kind of voice recognition is generally independent of the user who utters the commands. This means that the utilised apparatus does not strictly need any training session for learning the user voice model or pattern.

On the other hand, the voice recognition for free dictation purposes just provides the user with the possibility to freely dictate a text based upon a vocabulary of terms that at present can include up to 200,000 words, according to the ASR engine. The recognition for dictation purposes obviously requires more system resources and intrinsically it has a higher error rate, which is minimised by means of a learning session by the ASR engine of voice model of the user interacting with the ASR engine itself. This entails that, aiming at minimising the error rate in recognition of free dictation, the recognition itself is made dependent on the specific user who performed the learning session. The most recent voice recognition engines are being found adapted to enable the dictation recognition even after sessions of short duration (in the range of ten minutes) for learning the voice model of the user.

The voice synthesis technology and the TTS engine are extremely simpler and turn out to be quite independent of the user. The critical parameter of a voice synthesis engine is its similarity to the human voice and, therefore, its comprehensibility and naturalness. The most recent voice synthesis engines no more generate metallic sounds as it occurred up to recent years. In particular, the realisation of those that in linguistics are defined as supra-segmental signs results into a musicality that efficiently simulates the tone and accent variations of the voice.

At the present, many research centres and companies operating in informatics field are studying the possibility to enable a user visualising a web page on his/her user computer or client to interact therewith by means of the uttered commands. A user computer and more broadly an apparatus, even a mobile one, provided with a processing capability useable by a user will be designated in the following description with the term client.

As it is known, a web page is an electronic document or file, whose information items are structured in ipertextual mode, thereby enabling images, movies, sounds to be visualised on the monitor of a computer. An electronic document will be hereinafter designated with the term file. In particular, the web page visualisation files can be implemented in various languages, such as "HTLM", "JPS", "ASP", "JAVA" and they are visualised by means of a graphic interface designated (and hereinafter always indicated with the term) "browser".

Under the term "web" a software architecture can be understood for accessing the visualisation files of the web pages as stored on thousands server and connected by means of the telecommunication network. In the following description, a server computer or a computer which enables one or more clients to exploit or to find network resources will be in any case designated with term server. On the other hand, the term server will also designate a server computer with which a telephone user apparatus, possibly a cellular radiotelephone, can be connected by means of a telephone network, possibly a cellular network, so as to interact by voice with the server itself in order to obtain and/or provide information.
A web page assembly whose visualisation files are stored in a single data structure, generally having a tree organisation and accessible from a uniquely identifiable initial "root" page, is called web site. In general, each page of a web site is accessible by means of a unique address which identifies it.

As it is known, the presently more utilised telecommunication network for navigation is the Internet network. A browser allows navigation in Internet network and enables the visualisation of the web pages and the utilisation of the plural services offered by the visited web sites. When a client requests a server to furnish a web page whose visualisation file is stored in the server itself, the client specifically indicates to the server the unique address identifying the page, such address being known as the URL identifier of the web page (and it will be indicated with such term in the following description). In particular, a URL (Uniform Resource Locator) identifier is a uniform resource identifier which also specifies a communication protocol between server and client for transmitting the visualisation file of the requested web page.

The up to now suggested approaches to enable a voice interaction between a user and a web page provide for modifying the visualisation file of the web page, in both cases the connection to a server is effected by means of a client or a user telephone apparatus.

This appears to be a noticeable drawback, the more so when it is necessary to carry out such operation on all pages of a web site.

Document WO99/48088 discloses a system and method for implementing a voice-controlled Web browser program executing on a wearable computer, in order to enable navigation within a web page and to other web page corresponding to hyperlinks shown in the web page displayed by the voice-controlled Web browser.

Document US-A-6 385 583 discloses a complex Interactive Voice Response (IVR) and/or Voice Portal system which enables a user to access information by means of voice interaction or DTMF tones dialling with the system, so as to make the system retrieve the desired information. In particular, the disclosed system has specifically developed voice applications implemented in a specific markup language for interactive services.

The approach proposed according to this invention is to be considered in this context.

It is an object of this invention, therefore, to provide a method for enabling a voice interaction of web page or a web site in such a way that the user is enabled to select the interaction commands with the page, as well as with usual electronic devices, also by uttering phases, also in natural language, without any need to modify the web page visualisation files stored in the server, said pages being dynamically generated, starting from pages written with popular specific languages (such as, for instance, Broadvision ®) or other purposely developed applications.

A further object of this invention is to enable a voice access to the web page both though a client or mobile apparatus provided with processing capability and through a telephone apparatus. In this way, the method according to this invention enables the voice interaction of a so-called "multichannel" web site, or a web site accessible from a client computer, in particular a Personal Computer, from a telephone apparatus and from all mobile apparatuses provided with software.

A further object of this invention is to provide all necessary means to perform the method as well as apparatuses adapted to perform such method.
He specific subject-matter of this invention is a method for enabling the voice interaction of a web page, whose visualisation is defined by a corresponding visualisation file, comprising the recognition by a voice recognition engine of a phrase in a sound signal emitted in proximity to microphone means, the method being characterised in that a corresponding voice configuration file defining a state machine comprising one or more states including an initial state of the web page is associated to said web page, said voice configuration file including, for each state.
- one or more first information items, each relating to a corresponding phrase recognisable by said voice recognition engine, and, for each of said first information items,
- one or more second information items relating to one or more corresponding commands for interaction with said web page, and/or
- a third information item relating to a corresponding connection to an other web page, and/or
- a fourth information item identifying a corresponding subsequent state,
the method including the following successive steps:
A1- initialising a current state variable to the initial state of the web page,
B1- loading a grammar corresponding to the current state and including said recognisable phrases into said voice recognition engine,
C1- recognising, by means of said voice recognition engine, a phrase uttered in proximity to said microphone means among said recognisable phrases corresponding to the current state,
D1- when one or more interaction commands correspond to the recognised phrase, executing such commands,
E1- when a subsequent state corresponds to the recognised phrase, up-dating the current state variable to the subsequent state and repeating the method steps starting from the first step subsequent to step A1.

According to this invention, the method can further comprise, after step D1, the following step:
F1- when a connection to an other web page to which an other corresponding voice configuration file is associated corresponds to the current state, repeating all steps of the method in connection with said other web page.

Still according to this invention, in respect of at least one state, at least one of said first information items coincides with the corresponding phrase recognisable by said voice recognition engine.

When the web pages are generated in dynamic mode and, therefore, the contents of the phrases to be recognised (that could be retrieved from a database or dynamically generated) are not known *a priori*, in respect of at least one state, one or more of said first information items are references to corresponding phrases recognisable by said voice recognition engine and included in corresponding first files, said method further comprising, after said step A1 and before said step B1, the following step:
A2- when one or more references to corresponding phrases included in corresponding first files correspond to the current state, retrieving from said first files the phrases recognisable by said voice recognition engine included therein.

Preferably, according to this invention, said first files coincide in a single first file and, even more preferably, said single first file is the visualisation file of the web page.

Still according to this invention, in respect of at least one of said first information items of at least one state, at least one of said information items can coincide with the corresponding commands for interaction with the web page.

When the concerned web pages are generated in dynamic mode and the commands to be executed are not known *a priori*, in respect of at least one of said first information items of at least one state, one or more of said second information items can be references to one or more corresponding commands for interaction with the web page included in corresponding second files, the method further comprising, after said step C1 and before said step D1, the following step:
C2- when one or more references to one or more corresponding commands for interaction with the web page included in corresponding second files correspond to the recognised phrase, retrieving from said second files the interaction commands included therein.

Preferably, according to this invention, said second files coincide in a single second file and, even more preferably, said single second file is the visualisation file of the web page.

Again, according to this invention, in respect of at least one of said first information items of at least one state, said third information item can coincide with the corresponding connection to an other web page.

When the concerned web pages are generated in dynamic mode and the address for connection to an other web page is not known *a priori,* in respect to at least one of said first information items of at least one state, said third information item is a reference to a corresponding connection to an other web page included in a corresponding third file, preferably the visualisation file of the web page.

Preferably, according to this invention, the voice configuration file also includes, in respect of at least one state:
- one or more fifth information items, each related to a corresponding text to be vocally synthesised,
said method further comprising after said step A1 the following step:
B2- when one or more texts to be synthesised correspond to the current state, vocally synthesising at least one of said texts by means of a voice synthesis engine.

Still according to this invention, in respect of at least one state, at least one of said fifth information items coincides with the corresponding text to be vocally synthesised.

When the concerned web pages are generated in dynamic mode and the contents of the phrases to be voiced (that could be retrieved from a database or dynamically generated) are not known *a priori,* in respect of at least one state, one or more of said fifth information items can be references to corresponding texts to be vocally synthesised included in corresponding fourth files, the method further comprising, after said step A1 and before said step B2, the following step:
B3- when one or more references to corresponding texts to be vocally synthesised included in corresponding fourth files correspond to the current state, retrieving from said fourth files the texts to be vocally synthesised included therein.

Preferably, according to this invention, said fourth files coincide in a single fourth file and, even more preferably, said single fourth file is the visualisation file of the web page.

In a preferred embodiment, in respect of each state, the voice configuration file is organised according to a data structure including:
- a first section (ASR) for voice recognition, including one or more first sub-sections, each of which includes:
   a) one of said first information items relating to corresponding phrases recognisable by said voice recognition engine,
   b) an identification alphanumeric code,
- a second section (CMD) for interaction commands, including one or more second sub-section, each of which includes one of said second information items relating to said corresponding commands for interaction with the web page,
   said identification alphanumeric code including:
   b1) said fourth information item, in alphanumeric format, identifying the subsequent state corresponding to the recognisable phrase of the same first sub-section, and
   b2) a first alphanumeric sub-code identifying at least a second sub-section of the second section (CMD) of the interaction commands of the current or of the subsequent state.

Still according to this invention, at least a second sub-section of the second section (CMD) of the interaction commands can be void (or it can take a null value).

Preferably, according to this invention, at least a second sub-section of the second section (CMD) of the interaction commands includes a command for connection to an other web page.

Still more preferably, according to this invention, said data structure according to which the voice configuration file in respect of each state is organised further comprises:
- a third section (TTS) for voice synthesis, comprising one or more third sub-sections, each of which includes at least one of said fifth information items relating to said corresponding texts to be synthesised.

Still according to this invention, said alphanumeric identification code can further comprise:
b3) a second alphanumeric sub-code identifying at least a third sub-section of the third section (TTS) for voice synthesis of the current or of the subsequent state.

Further according to this invention, at least a third sub-section of the third section (TTS) for voice synthesis can be void (or it can take a null value).

Still according to this invention, said data structure according to which the voice configuration file in respect of each state is organised can further comprise:
- a fourth section (ADV) for advertisement messages, comprising one or more fourth sub-sections, each of which includes at least one of said fifth information items relating to said corresponding texts to be synthesised.

Still according to this invention, said alphanumeric identification code can further comprise:
b4) a third alphanumeric sub-code identifying at least a fourth sub-section of the fourth section (ADV) for vocal advertisement messages of the current or of the subsequent state.

Further according to this invention, at least a fourth sub-section of the fourth section (ADV) for vocal advertisement messages can be void (or it can take a null value).

In a preferred embodiment of this invention, the visualisation file and the voice configuration file are stored in a server, accessible through a telecommunication network by at least one user client, said method further comprising, upon request of a web page by a client provided with said microphone means and with a voice recognition engine, before said step C1, the following two steps:
A0.1- transmitting the visualisation file of the requested web page from said server to said client,
A0.2- visualising said web page on said client, and before said step A1, the following step:
A0.3- transmitting the voice configuration file of the requested web page from said server to said client, and after said step D1, the following step:
   F2- when a connection to an other web page corresponds to the current state, said client requesting said other web page from said server.

The graphic assistants or agents, technically defined as "characters" are a natural interaction interface between a user and the applications of a client computer. Such characters are software components that appear as figures, preferably animated figures (animated graphic interfaces), that enable the user to interact with the applications as if he/she were communicating with such figures. Some embodiments of this invention utilise the synthesis and voice recognition functions together with such graphic, preferably animated interfaces, as assistants, whose movements and behaviours are defined based upon events or actions managed by said voice applications. Therefore, a suitable process logic as realised in an application executed by the client preferably utilises an animated vocal assistant, operating on the base of the information items included in the voice configuration files.

Therefore, preferably according to this invention, the voice configuration file further comprises, in respect of at least one state:
- one or more sixth information items, each related to a corresponding graphic interface to be visualised,
the method further comprising, after step A1, the following step:
B4- when one or more graphic interfaces correspond to the current state, visualising at least one of said graphic interfaces on said client.

Even more preferably, according to this invention, at least one of said graphic interfaces to be visualised comprises an animated graphic interface and in that the corresponding sixth information item comprises the related movement commands.

Still according to this invention, at least one of said graphic interfaces to be visualised can include a text.

In a preferred embodiment, said data structure, according to which said voice configuration file is organised in respect of each state, further comprises:
- a fifth section for movement commands, comprising one or more fifth sub-sections, each of which includes at least one of said sixth information items related to said movement commands of a corresponding animated graphic interface.

Again according to this invention, each fifth sub-section of said fifth section can include an information item relating to the arrival position and an information item relating to the movement speed of said animated graphic interface.

Again according to this invention, said identification alphanumeric code can further comprise:
b5) a fourth identification alphanumeric sub-code to identify at least a fifth sub-section of said fifth section (MOV) of the movement commands of the current or of the subsequent state.

Further according to this invention, at least a fifth sub-section of the fifth section of the movement commands can be void (or it can take a null value).

Alternatively to the access through a connection between a server and a client, this invention provides for accesses via telephone network, which is made possible by means of an application executed on said server with utilisation of the same logic as executed on the client and previously illustrated with reference to the connection between server and client. This enables the user to interact with the web pages by means of a simple telephone call, by transmitting voice commands and receiving synthesised or pre-recorded answers. The voice configuration files for application via telephone connection have the same structure as those utilised in a connection between server and client, even if they are lacking of the possibility to visualise a graphic interface as an assistant. In this case, the voice interaction process is implemented in such a way as to enable a rapid interactive telephone dialogue different from the one established in a connection between a server and a client, since the interface to the user is purely vocal, rather than also graphic.

Therefore, according to an alternative preferred embodiment of this invention, said visualisation file and said voice configuration file are stored in a server, accessible by means of a telephone network from at least one user telephone apparatus, said server being provided with at least a voice synthesis engine and a voice recognition engine, said user telephone apparatus being provided with said microphone means as well as with sound reproducing means for reproducing the texts as vocally synthesised by said voice synthesis engine.

Still according to this invention, said telephone network is a cellular radiotelephone network and in that said user telephone apparatus is a cellular radio telephone apparatus.

It is further subject-matter of this invention a method for enabling the voice interaction of a web site, comprising one or more web pages, the visualisation of each web page being defined by a corresponding visualisation file, the method being characterised by performing, in respect of at least one page of said web site, said method for enabling the voice interaction of a web page.

In this case, according to this invention, the visualisation files and the voice configuration files of the web pages of the site can be stored in a server, accessible by means of a telecommunication network from at least one user client.

Also in this embodiment, the method can further comprise before said step A0.3, the following step:
A0.0 checking whether a voice configuration file of the requested web page exists,
the method executing the steps of the steps of the method for enabling the voice interaction of a web page only when the result of said check step A0.0 is positive.

Further according to this invention, should the result of said check step A0.0 be negative, the method can perform the following step:

F3- signalling through said client that the requested web page is not enabled to voice interaction, preferably by vocal synthesis of a message effected by the voice synthesis engine.

Alternatively, according to this invention, the visualisation files and the voice configuration files of the web pages of the concerned site are stored in a server, accessible by means of a telephone network from at least one user telephone apparatus, and the method can perform, in respect of at least one page of said web site, the method for enabling the voice interaction of a web page.

It is further subject-matter of this invention a computer having one or more web page visualisation files stored therein, characterised in that it further has stored therein, for at least one web page in respect of which it has the related visualisation file stored therein, a corresponding voice configuration file adapted to enable the voice interaction of a web page according to the method for enabling the voice interaction of a web page as hereinabove described.

Preferably, according to this invention, the computer has stored therein the voice configuration files of web pages belonging to a single web site according to the same data structure by which the visualisation files of the web page of the concerned site are stored.

In this case, each web page could have a voice configuration file associated therewith via client and a voice configuration file associated therewith via telephone apparatus. Preferably, the voice configuration files have the same names as the visualisation files of the related web pages, but with "mv" and "mvt" extensions for vocalisation via client and via telephone apparatus, respectively.

According to this invention, such computer can be a server, accessible through a telecommunication network from at least one user client requesting a web page whose visualisation file is stored in said server, and further characterised in that it is adapted, in reply to a client requesting a web page whose corresponding visualisation file is stored therein, to perform said step A0.3 according to the method for enabling the voice interaction of a web page as hereinabove described.

Further subject-matter of this invention is a user computer or client provided with microphone means and with a voice synthesis engine and with a voice recognition engine, adapted to access a server through a telecommunication network in order to request a web page whose corresponding voice configuration file is stored in said server, characterised in that it is adapted to receive the voice configuration file of the requested web page and it is adapted to perform said steps A0.2, A1, B1, C1, D1, E1 and F2, possibly in combination with step F1 and/or step A2 and/or step C2 and/or step B2 and/or step B3 and/or step B4 of the method for enabling the voice interaction of a web page as hereinabove described.

This invention further discloses and claims a server computer, accessible through a telephone network from at least one user telephone apparatus, such server being provided with a voice synthesis engine and with a voice recognition engine adapted to perform the steps of the method for enabling the voice interaction of a web page as hereinabove described.

It is further subject-matter of this invention an electric, magnetic or electromagnetic signal characterised in that it includes at least one voice configuration file of a web page, possibly provided with one or more sixth information items, each related to a corresponding graphic interface to be visualised, adapted to enable the voice interaction of the web page according to the method for enabling the voice interaction of a web page as hereinabove described.

This invention further discloses and claims a memory medium readable by a computer, characterised in that it includes at least one voice configuration file of a web page, possibly provided with one or more sixth information items, each related to a corresponding graphic interface to be visualised, adapted to enable the voice interaction of the web page according to the method for enabling the voice interaction of a web page as hereinabove described.

Again according to this invention, such memory medium can have stored therein the voice configuration files of web pages belonging to a single web site according to the same data structure by which the visualisation files of the web page of the concerned site are stored.

A further specific subject-matter of this invention is a computer program characterised in that it includes code means adapted to perform, when they operate on a computer, said step A0.3 of the method for enabling the voice interaction of a web page as hereinabove described.

A further specific subject-matter of this invention is a memory medium readable by a computer having a program stored therein, characterised in that said program is a computer program as just above described.

A further specific subject-matter of this invention is a computer program characterised in that it includes code means adapted to perform, when they operate on a computer, said steps A0.2, A1, B1, C1, D1, E1 and F2, possibly in combination with step F1 and/or step A2 and/or step C2 and/or step B2 and/or step B3 and/or step B4 of the method for enabling the voice interaction of a web page as hereinabove described.

A further specific subject-matter of this invention is a memory medium readable by a computer having a program stored therein, characterised in that said program is a computer program as just above described.

A further specific subject-matter of this invention is a computer program characterised in that characterised in that it includes code means adapted to perform, when they operate on a computer, the steps of the method for enabling the voice interaction of a web page as hereinabove described in respect of a connection between a server having a voice configuration file stored therein and a user telephone apparatus via a telephone network.

Still further specific subject-matter of this invention is a memory medium readable by a computer having a program stored therein, characterised in that said program is a computer program as just above - described.

This invention will be now described, by way of illustration, not by way of limitation, according to its preferred embodiments, by particularly referring to the Figures of the annexed drawings, in which:
Figure 1 schematically shows the connection between a client and a server for request of a web page enabled to voice interaction according to a preferred embodiment of the method according to this invention;
Figure 2 schematically shows a preferred embodiment of the voice configuration file of a web page according to this invention;
Figure 3 schematically shows the modules of the software application on the client performing the method according to this invention; and
Figure 4 shows a flow chart schematically representing the preferred embodiment of the method for enabling the voice interaction of a web site according to this invention.

The following description will be substantially related to the embodiments of this invention comprising a server accessible from at least one client, which requests a web page from the server by means of a telecommunication network.

The method according to this invention consists in providing:
on the server: a structure of voice configuration file of the pages of a web site which is specular to the structure of the visualisation files, and includes the information items relating to the texts to be voiced by the web page, the words/phrases utterable by the user and the structures of the conversations; and
on the client: a suitable process logic implemented in a software application and operating on the information items of said voice configuration files.

As above said, the method is adapted to enable the voice interaction of a web page of a web site; it enables a full voice interaction between a user and any site.

The main feature of the method is realised in that there is no need to make any change to the existing web site.

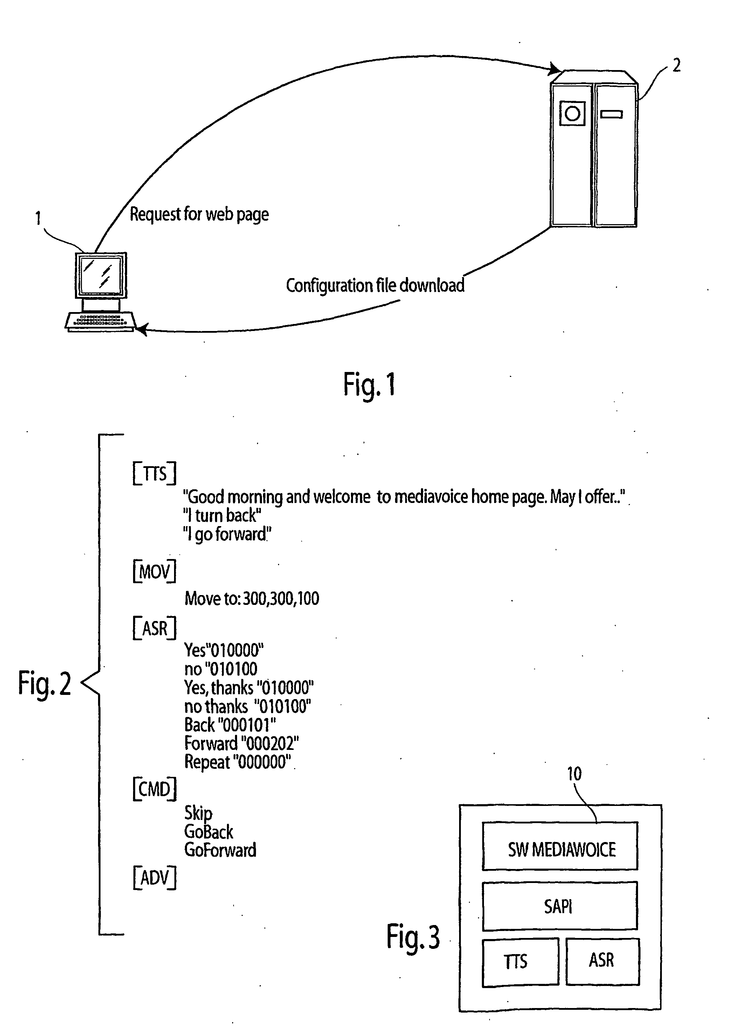

By referring to Figure 1, when a user with his/her client 1 connects through a browser to a site stored on a server 2 and requests a web page therefrom, the software application provided on said client 1 locally downloads one or more files suitably stored on said server 2. Such files will enable both the voice synthesis and the speech recognition of the user to be carried out.

A bi-directional dialogue will be established, therefore between the user and the web site page so as to enable navigation both within the concerned web site and to other sites enabled to voice interaction by means of the same method.

A file structure organised in a directory of a web site, provided with a root, which will include the voice configuration files, will have to be realised on server 2. In other words, the method provides for generating a structure specular to (or even coincident with) the structure of the visualisation files of the conventional web site, having as many voice configuration files as web pages to be enabled to voice interaction. Said server 2 could also have the voice configuration files accessible through the telephone network stored therein, said files being organised in the same structure or in a further structure similar to (or coincident with) the structure of the visualisation files.

By referring to Figure 2, a voice configuration file is comprised of states, or information macrosections representing the states of the voice interaction between the user and the web page. Each state in turn is comprised of five sections: a first section ASR related to voice recognition; a second section CMD related to interaction commands; a third section TTS related to voice synthesis; a fourth section ADV related to voice advertisement messages and a fifth section MOV related to movement commands of an animated graphic interface representing a vocal assistant.

In other embodiments, it is also possible for the voice configuration files to have the same information items assembled in different ways. For instance, the TTS sections of the various states could be assembled in a single TTS section; or the ADV section could be incorporated with the TTS section or with the CMD section.

The TTS, CMD and ADV sections of all states include, in respect of a particular web page, respectively, all possible phases to be synthesised, all possible interaction commands the application on client 1 can execute in respect of said particular web page and (preferably all pointers to memory locations containing) all possible advertisement messages that can be synthesised.

Each state defined in the voice configuration file includes the information items which the application on the client 1 needs in order to formulate, from the current web page, the related questions and/or assertions and in order to understand the user utterations.

The ASR section of each state includes a row assembly (or sub-sections) each of which comprised two main portions: the first portion includes a phrase that the client application can recognise, while the second portion includes all information items relating to the actions that the same application can perform, in respect of the recognised phrase. In the embodiment of Figure 2, this second portion includes three groups of digits (in particular, three groups of two decimal digits): the first group identifies the destination state, namely the subsequent state of the voice interaction between the user and the current web page; the second group identifies the phrase to be voiced as included in the TTS section of the present state; the third group identifies the command of the CMD section of the present state that the concerned application should execute upon recognition of the phrase.

The MOV section comprises the movements and/or the positions that the vocal assistant can take in respect of that particular state.

In some cases, the commands to be executed and/or the texts to be synthesised and/or the movements of the vocal assistant can be lacking and, as a consequence thereof, the related sections or sub-sections can be void, or can take a mull value ("mil").

The digit group assembly can be enlarged by further groups, indicating further process operations that the application could perform; for instance, a further digit group could indicate a specific advertisement message to by synthesised upon recognition of a particular phase comprised of one or more words.

In addition, the number of sections or sub-sections of each state can be increased. The further sections and/or sub-sections could add useful information items in order to enable process operations to be performed together with the voicing operations of the related web page (for instance, the advertisement messages that can by synthesised could be configured within the states through said ADV section).

When the web pages are realised in dynamic way and when there is no prior knowledge of the contents, for instance, of the phrases to be voiced and/or to be recognised and/or of the related commands to be executed (such as when they are the result of the process operations of the server as texts retrieved from a database or dynamically generated), this invention takes such dynamic behaviour into account. In fact, the voice configuration files include information items such as to enable the application to identify the dynamic portions.

In particular, the application on client 1 recognised the dynamic portions of the voice configuration files and substitutes therefor the portions of another file, preferably the visualisation file.

By strict way of exemplification, a phrase to be synthesised could be located through a first index intended to indicate the begin point of the text and a second index intended to indicate the end point of the text, these indexes uniquely identifying the object of the visualisation file of the web page to be synthesised. These two indexes include items adapted to identify, within the structure of the visualisation file, the incorporation level of the object (or the depth level of the object within the visualisation file) as well as its position within said specific level. Assuming that the visualisation file includes an object defined by the following HTML language:

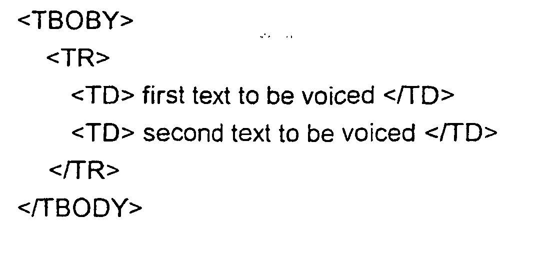

When it desired to vocalise the second text, the voice configuration file relating to this web page could include the following dynamic pointer to these contents to be vocalised:
[TTS]
...
$ (TBODY, 1 (TR, 1 (TD,2))), (TBODY, 1 (TR,1 (/TD,2)))
...
It can be observed that the begin-of-text index
(TBODY, 1 (TR, 1 (TD,2)))
and the end-of-text index
(TBODY, 1 TR,1 (/TR, 1 (/TD, 2)))
uniquely identify a content, also a dynamic content, within the visualisation file of the web page. It is to be noted that the dynamic contents of the voice configuration files distinguish themselves with respect to the static ones by the presence of a specific character, such as "$".

Pointing to dynamic contents according to this invention includes any type of meta-information on support adapted to operate as an information container of the web page or a container for pointers to the information items of the web page. Such containers comprise the so-called "style sheets" as standardised by the W3C union under the term "Cascading Style Sheets" (CSS). In particular, the styles can be expressed either by an internal code of the web page or by external files (namely the CSS) connected with the web page itself. Other style sheets similar to CSS are the so-called "Transformation" files, such as, for instance, the files in XSL format.

Furthermore, pointing to dynamic contents according to this invention can be realised by pointing to information items included in a tag and broadly to objects of the web page with more powerful modes than the simple specification of the co-ordinates, as it has been above shown in the example. In particular, such more powerful modes include references to the type of the pointed to objects (for instance, tables) together with specific names and with their co-ordinates, in order to make such pointing more robust also in view of any possible change to the tag structure of the web page.

In addition, when it is desired to realise a pointing to dynamic contents, it is possible to utilise program language of the "scripting" type. When some web page are periodically generated (for instance at each day) with a different name but with the same structure, a unique voice configuration file is created and utilised by the application on client 1 in connection with all web pages which the concerned file can be associated with.

In the specific case of dynamic web pages, a number of different structures can be generated in connection with the same web page. In this case, a voice configuration file is generated in connection with any possible structure related to said specific dynamic web page. Also in this case, the application on client 1 recognised the structure and utilises the correct voice configuration file associated thereto.

Advantageously, the voice configuration files can be stored on server 2 and/or can be transmitted through the network in compressed format.

Furthermore, a special file is inserted into the root directory of the enabled web site and it is need by the application residing in client 1 just when a request of any web page of the site is effected. In this manner, the application will have the possibility to check whether the accessed site is a site enabled to voice interaction according to this invention.

By referring to Figure 3, the effective software application as above said is resident in client 1 of the user and it is substantially comprised of the following modules:
- a TTS engine for voice synthesis;
- an ASR engine for voice recognition;
- an interface for voice application programs SAPI and
- a voice application program 10 which utilises the dynamic grammars acting as filters in respect of what the user can utter.

The voice engines can be of any kind, or, in other words, the software application is not bound to a particular kind/model. It preferably utilises the SAPI standard.

Application 10 on client 1 enables, on one hand, to voice interact with a page of the web site and, on the other hand, it enables to navigate both within the site itself and to other web sites enabled to voice interaction according to this invention.

Since this invention is independent of the specific voice engines, also in respect of the utilised language, the vocalisation of sites with multi-language contents is made possible.

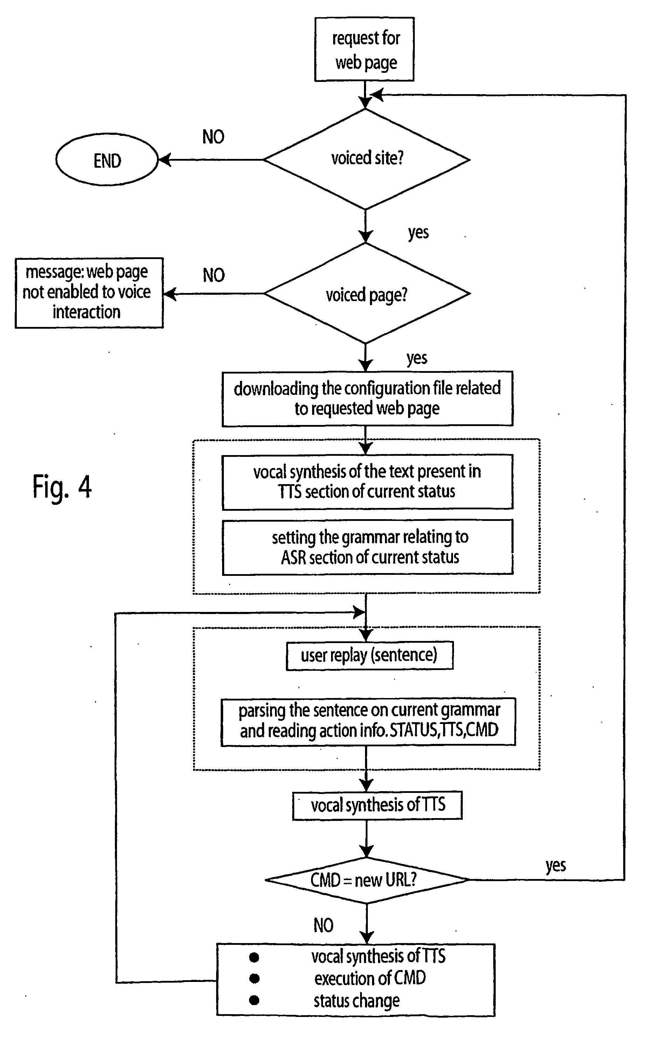

By referring to the flow chart of Figure 4, it can be observed that the application 10 on client 1 utilises the voice configuration files of the web pages as stored on server 2, in order to perform the above operations. In particular, when a user connects with his/her client 1 to a browser at its initial page or "home page" of an enabled site, for example *www.mediavoice.it ,* the concerned application 10, upon checking that the concerned web site is enabled to voice interaction and that the requested web page is also enabled to voice interaction, it automatically enters into the related directory of the enabled web site and locally downloads the voice configuration file existing therein as corresponding to the requested web page (//*mediavoice.it*/*home.mv*). the voice configuration file enables the application on client 1 to realise an effective dialogue between the user and the displayed web page, which possibly includes a succession, even a very long succession, of questions and answers, between the user and the concerned particular page of the web site.

The application 10 on client 1, after having locally downloaded the voice configuration file, stores the sections relating to the different states into an internal memory structure and initialises the voice recognition engine by loading the grammar defined in the ASR section relating to the initial state. Then, the application 10 synthesised the first phrase of the initial state (for instance, a welcome phrase on the web page). Subsequently, the voice interaction prosecutes between the user and the application 10 operating as voice interface to the current web page.

When the user utters a phrase or requests something from the page contained in the current grammar, the application recognised the phrase and performs the operations associated to such phase, as it is defined in the second ASR section of the phrase itself. In particular, the user can also utter any identifier URL of a connection or link included in the current page.

The application 10 then utters the associated phrase, executes the corresponding command and switches itself to the subsequent state. The transfer to the new state entails the construction and the download of the grammar defined in the ASR section and the vocal synthesis of the TTS section of the present state.

The presence of said N states within the same voice configuration file is then necessitated in view of the fact that even on the same web page it is possible to establish an effective dialogue between the user of client 1 and the concerned web page.

When the command relating to recognition of a particular phrase entails the navigation, by the browser, on another web page, the application 10 resumes its cycle by downloading the corresponding voice configuration file and by taking the above described actions again.

The operation logic of client 1 can be applied also to the utilisation of apparatuses provided with processing capability, such as mobile/hand-held devices, such as palm-top or hand-held PC.

The vocalisation procedure of a web site, in particular multichannel web sites, can be at least partially automatically carried out by means of developed instruments provided with dedicated algorithms adapted to generate voice configuration files starting from the visualisation files of the web pages. Such development instruments can include different functions according to the access type it is desired to apply to the web pages and, therefore, according to the instruments from which the access possibilities to the same web pages it is desired to realise (for instance PC, telephone devices, palm-top). The development instruments could also record in a dedicated file all performed operations, in particular all generated voice configuration files, in order to monitor themselves.

The preferred embodiments of this invention have been described and a number of variations have been suggested hereinbefore, but it should expressly be understood that those skilled in the art can make other variations and changes, without so departing from the scope thereof, as defined in the enclosed claims.

## Claims

1. A method for enabling the voice interaction of a web page, whose visualisation is defined by a corresponding visualisation file, the method comprising the recognition by a voice recognition engine of a phrase in a sound signal emitted in proximity to microphone means, the method being **characterised in that** a corresponding voice configuration file, defining a state machine comprising one or more states which include an initial state of the web page, is associated to said web page, said voice configuration file including, for each state:
- one or more first information items, each relating to a corresponding phrase recognisable by said voice recognition engine, and, for each of said first information items,
- one or more second information items relating to one or more corresponding commands for interaction with said web page, and/or
- a third Information item relating to a corresponding connection to an other web page, and/or
- a fourth information item identifying a corresponding subsequent state,
the method including the following successive steps:
A1- initialising a current state variable to the initial state of the web page,
B1- loading a grammar corresponding to the current state and including said recognisable phrases into said voice recognition engine,
C1- recognising, by means of said voice recognition engine, a phrase uttered in proximity to said microphone means among said recognisable phrases corresponding to the current state,
D1- when one or more interaction commands correspond to the recognised phrase, executing such commands,
E1- when a subsequent state corresponds to the recognised phrase, up-dating the current state variable to the subsequent state and repeating the method steps starting from the first step subsequent to step A1.

2. A method according to claim 1, **characterised in that** it further comprises, after step D1, the following step:
F1- when a connection to an other web page to which an other corresponding voice configuration file is associated corresponds to the current state, repeating all steps of the method in connection with said other web page.

3. A method according to claim 1 or 2, **characterised in that**, in respect of at least one state, at least one of said first information items coincides with the corresponding phrase recognisable by said voice recognition engine.

4. A method according to any one of the preceding claims, **characterised in that**, in respect of at least one state, one or more of said first information items are references to corresponding phrases recognisable by said voice recognition engine and included in corresponding first files, said method further comprising, after said step A1 and before said step B1, the following step:
A2- when one or more references to corresponding phrases included in corresponding first files correspond to the current state, retrieving from said first files the phrases recognisable by said voice recognition engine included therein.

5. A method according to claim 4, **characterised in that** said first files coincide in a single first file.

6. A method according to claim 5, **characterised in that** said single first file is the visualisation file of the web page.

7. A method according to any one of the preceding claims, **characterised in that**, in respect of at least one of said first information items of at least one state, at least one of said information items coincides with the corresponding commands for interaction with the web page.

8. A method according to any one of the preceding claims, **characterised in that**, in respect of at least one of said first information items of at least one state, one or more of said second information items are references to one or more corresponding commands for interaction with the web page included in corresponding second files, the method further comprising, after said step C1 and before said step D1, the following step:
C2- when one or more references to one or more corresponding commands for interaction with the web page included in corresponding second files correspond to the recognised phrase, retrieving from said second files the interaction commands included therein.

9. A method according to claim 8, **characterised in that** said second files coincide in a single second file.

10. A method according to claim 9, **characterised in that** said single second file is the visualisation file of the web page.

11. A method according to any one of the preceding claims, **characterised in that**, in respect of at least one of said first information items of at least one state, said third information item coincides with the corresponding connection to an other web page.

12. A method according to any one of the preceding claims, **characterised in that**, in respect to at least one of said first information items of at least one state, said third information item is a reference to a corresponding connection to an other web page included in a corresponding third file.

13. A method according to claim 12, **characterised in that** said third file is the visualisation file of the web page.

14. A method according to any one of the preceding claims, **characterised in that** the voice configuration file also includes, in respect of at least one state:
- one or more fifth information items, each related to a corresponding text to be vocally synthesised,
said method further comprising after said step A1 the following step:
B2- when one or more texts to be synthesised correspond to the current state, vocally synthesising at least one of said texts by means of a voice synthesls engine.

15. A method according to claim 14 **characterised in that**, in respect of at least one state, at least one of said fifth information items coincides with the corresponding text to be vocally synthesised.

16. A method according to claim 14 or 15, **characterised in that**, in respect of at least one state, one or more of said fifth information items are references to corresponding texts to be vocally synthesised included in corresponding fourth files, the method further comprising, after said step A1 and before said step B2, the following step:
B3- when one or more references to corresponding texts to be vocally synthesised included in corresponding fourth files correspond to the current state, retrieving from said fourth files the texts to be vocally synthesised included therein.

17. A method according to claim 16, **characterised in that** said fourth files coincide in a single fourth file.

18. A method according to claim 17, **characterised in that** said single fourth file is the visualisation file of the web page.

19. A method according to any one of the preceding claims, **characterised in that**, in respect of each state, the voice configuration file is organised accordirig to a data structure including:
- a first section (ASR) for voice recognition, including one or more first sub-sections, each of which includes:
a) one of said first information items relating to corresponding phrases recognisable by said voice recognition engine,
b) an identification alphanumeric code,
- a second section (CMD) for interaction commands, including one or more second sub-section, each of which includes one of said second information items relating to said corresponding commands for interaction with the web page,
said identification alphanumeric code including:
b1) said fourth information item, in alphanumeric format, identifying the subsequent state corresponding to the recognisable phrase of the same first sub-section, and
b2) a first alphanumeric sub-code identifying at least a second sub-section of the second section (CMD) of the interaction commands of the current or of the subsequent state.

20. A method according to claim 19, **characterised in that** at least a second sub-section of the second section (CMD) of the interaction commands is void.

21. A method according to claim 19 or 20, **characterised in that** at least a second sub-section of the second section (CMD) of the interaction commands includes a command for connection to an other web page.

22. A method according to any one of claims 14 to 18 and according to any one of claims 19 to 21, **characterised in that** said data structure according to which the voice configuration file in respect of each state is organised further comprises:
- a third section (TTS) for voice synthesis, comprising one or more third sub-sections, each of which includes at least one of said fifth information items relating to said corresponding texts to be synthesised.

23. A method according to claim 22, **characterised in that** said alphanumeric identification code further comprises:
b3) a second alphanumeric sub-code identifying at least a third sub-section of the third section (TTS) for voice synthesis of the current or of the subsequent state.

24. A method according to claim 22 or 23, **characterised in that** at least a third sub-section of the third section (TTS) for voice synthesis is void.

25. A method according to any one of claims 14 to 18 and according to any one of claims 19 to 24, **characterised in that** said data structure according to which the voice configuration file in respect of each state is organised further comprises:
- a fourth section (ADV) for advertisement messages, comprising one or more fourth sub-sections, each of which includes at least one of said fifth information items relating to said corresponding texts to be synthesised.

26. A method according to claim 25, **characterised in that** said alphanumeric identification code further comprises:
b4) a third alphanumeric sub-code identifying at least a fourth sub-section of the fourth section (ADV) for vocal advertisement messages of the current or of the subsequent state.

27. A method according to claim 25 or 26, **characterised in that** at least a fourth sub-section of the fourth section (ADV) for vocal advertisement messages is void.

28. A method according to any one of the preceding claims, **characterised in that** the visualisation file and the voice configuration file are stored in a server, accessible through a telecommunication network by at least one user client, said method further comprising, upon request of a web page by a client provided with said microphone means and with a voice recognition engine,
before said step C1, the following steps:
A0.1- transmitting the visualisation file of the requested web page from said server to said client,
A0.2- visualising said web page on said client, and before said step A1, the following step:
A0.3- transmitting the voice configuration file of the requested web page from said server to said client, and
after said step D1, the following step:
F2- when a connection to an other web page corresponds to the current state, said client requesting said other web page from said server.

29. A method according to claim 28, **characterised in that** the voice configuration file further comprises, in respect of at least one state:
- one or more sixth information items, each related to a corresponding graphic interface to be visualised,
the method further comprising, after step A1, the following step:
B4- when one or more graphic interfaces correspond to the current state, visualising at least one of said graphic interfaces on said client.

30. A method according, to claim 29, **characterised in that** at least one of said graphic interfaces to be visualised comprises an animated graphic interface and **in that** the corresponding sixth information item comprises the related movement commands.

31. A method according to claim 29 or 30, **characterised in that** at least one of said graphic interfaces to be visualised includes a text.

32. A method according to any one of claims 19 to 27 and according to claim 30, **characterised In that** said data structure, according to which said voice configuration file is organised in respect of each state, further comprises:
- a fifth section (MOV) for movement commands, comprising one or more fifth sub-sections, each of which includes at least one of said sixth information items related to said movement commands of a corresponding animated graphic interface.

33. A method according to claim 32, **characterised in that** each fifth sub-section of said fifth section (MOV) includes an information item relating to the arrival position and an information item relating to the movement speed of said animated graphic interface.

34. A method according to claim 32 or 33, **characterised in that** said identification alphanumeric code further comprises:
b5) a fourth identification alphanumeric sub-code to identify at least a fifth sub-section of said fifth section (MOV) of the movement commands of the current or of the subsequent state.

35. A method according to any one of claims 32 to 34, **characterised in that** at least a fifth sub-section of the fifth section (MOV) of the movement commands is void.

36. A method according to any one of claims 28 to 35, **characterised in that** said telecommunication network is the Internet network.

37. A method according to any one of claims 14 to 18 or according to any one of claims 22 to 27, **characterised in that** said visualisation file and said voice configuration file are stored in a server, accessible by means of a telephone network from at least one user telephone apparatus, said server being provided with at least a voice synthesis engine and a voice recognition engine, said user telephone apparatus being provided with said microphone means as well as with sound reproducing means for reproducing the texts as vocally synthesised by said voice synthesis engine.

38. A method according to claim 37, **characterised in that** said telephone network is a cellular radiotelephone network and **in that** said user telephone apparatus is a cellular radio telephone apparatus.

39. A method for enabling the voice interaction of a web site, comprising one or more web pages, the visualisation of each web page being defined by a corresponding visualisation file, the method being **characterised by** performing, in respect of at least one page of said web site, the method for enabling the voice interaction of a web page according to any one of the preceding claims 1 to 27.

40. A method according to claim 39, **characterised in that** the visualisation files and the voice configuration files of the web pages of the site are stored in a server, accessible by means of a telecommunication network from at least one user client, and **in that** the method performs, in respect of at least one page of said web site, the method for enabling the voice interaction of a web page according to any one of the preceding claims 28 to 36.

41. A method according to claim 40, **characterised in that** it further comprises before said step A0.3, the following step:
A0.0 checking whether a voice configuration file of the requested web page exists,
the method executing the steps of the steps of the method for enabling the voice interaction of a web page only when the result of said check step A0.0 is positive.

42. A method according to claim 41, **characterised in that**, should the result of said check step A0.0 be negative, the method performs the following step:
F3- signalling through said client that the requested web page is not enabled to voice interaction.

43. A method according to claim 42, **characterised in that** said step F3 consists of the voice synthesis of a message effected by the voice synthesis engine.

44. A method according to claim 39, **characterised in that** the visualisation files and the voice configuration files of the web pages of the concerned site are stored in a server, accessible by means of a telephone network from at least one user telephone apparatus, and **in that** the method performs, in respect of at least one page of said web site, the method for enabling the voice interaction of a web page according to claim 37 or 38.

45. A computer having one or more web page visualisation files stored therein, **characterised in that** it further has stored therein, for at least one web page in respect of which it has the related visualisation file stored therein, a corresponding voice configuration file adapted to enable the voice interaction of a web page according to the method for enabling the voice interaction of a web page according to any one of the preceding claims 1 to 27.

46. A computer according to claim 45, **characterised in that** it has stored therein the voice configuration files of web pages belonging to a single web site according to the same data structure by which the visualisation files of the web page of the concerned site are stored.

47. A computer according to claim 45 or 46, **characterised in that** it is a server, accessible through a telecommunication network from at least one user client requesting a web page whose visualisation file is stored in said server, and further **characterised in that** it is adapted, in reply to a client requesting a web page whose corresponding visualisation file is stored therein, to perform said step A0.3 according to the method for enabling the voice interaction of a web page according to any one of claims 28 to 36.

48. A user computer or client provided with microphone means and with a voice synthesis engine and with a voice recognition engine, adapted to access a server according to claim 47 through a telecommunication network in order to request a web page whose corresponding voice configuration file is stored in said server, **characterised in that** it is adapted to receive the voice configuration file of the requested web page and it is adapted to perform said steps A0.2, A1, B1, C1, D1, E1 and F2 of the method for enabling the voice interaction of a web page according to any one of claims 28 to 36.

49. A user computer or client according to claim 48, **characterised in that** it is further adapted to perform said step F1 of the method for enabling the voice interaction of a web page according to claim 2.

50. A user computer or client according to claim 48 or 49, **characterised in that** it is further adapted to perform said step A2 of the method for enabling the voice interaction of a web page according to claim 4.

51. A user computer or client according to any one of claims 48 to 50, **characterised in that** it is further adapted to perform said step C2 of the method for enabling the voice interaction of a web page according to claim 8.

52. A user computer or client according to any one of claims 48 to 51, **characterised in that** it is further adapted to perform said step B2 of the method for enabling the voice interaction of a web page according to claim 14.

53. A user computer or client according to claim 52, **characterised in that** it is further adapted to perform said step B3 of the method for enabling the voice interaction of a web page according to claim 16.

54. A user computer or client according to any one of claims 48 to 53, **characterised in that** it is further adapted to perform said step B4 of the method for enabling the voice interaction of a web page according to claim 29.

55. A computer according to claim 45 or 46, **characterised in that** it is a server, accessible through a telephone network from at least one user telephone apparatus, **in that** it is provided with a voice synthesis engine and with a voice recognition engine, and further **characterised in that** it is adapted to perform the steps of the method for enabling the voice interaction of a web page according to claim 37 or 38.

56. An electric, magnetic or electromagnetic signal **characterised in that** it includes at least one voice configuration file of a web page adapted to enable the voice interaction of the web page according to the method for enabling the voice interaction of a web page according to any one of claims 1 to 27.

57. An electric, magnetic or electromagnetic signal according to claim 56, **characterised in that** said at least one voice configuration file of a web page is adapted to enable the voice interaction of the web page according to the method for enabling the voice interaction of a web page according to any one of claims 29 to 35.

58. A memory medium readable by a computer, **characterised in that** it includes at least one voice configuration file of a web page adapted to enable the voice interaction of the web page according to the method for enabling the voice interaction of a web page according to any one of preceding claims 1 to 27.

59. A memory medium according to claim 58, **characterised in that** said at least one voice configuration file of a web page is adapted to enable the voice interaction of the web page according to the method for enabling the voice interaction of a web page according to any one of claims 29 to 35.

60. A memory medium according to claim 58 or 59, **characterised in that** it has stored therein the voice configuration files of web pages belonging to a single web site according to the same data structure by which the visualisation files of the web page of the concerned site are stored.

61. A computer program **characterised in that** it includes code means adapted to perform, when they operate on a computer, said step A0.3 of the method for enabling the voice interaction of a web page according to any one of claims 28 to 36.

62. A memory medium readable by a computer having a program stored therein, **characterised in that** said program is a computer program according to claim 61.

63. A computer program **characterised in that** it includes code means adapted to perform, when they operate on a computer, said steps A0.2, A1, B1, C1, D1, E1 and F2 of the method for enabling the voice interaction of a web page according to any one of claims 28 to 36.

64. A computer program according to claim 63, **characterised in that** it further includes code means adapted to perform, when they operate on a computer, said step F1 of the method for enabling the voice interaction of a web page according to claim 2.

65. A computer program according to claim 63 or 64, **characterised in that** it is further adapted to perform said step A2 of the method for enabling the voice interaction of a web page according to claim 4.

66. A computer program according to any one of claims 63 to 65, **characterised in that** it is further adapted to perform said step C2 of the method for enabling the voice interaction of a web page according to claim 8.

67. A computer program according to any one of claims 63 to 66, **characterised in that** it is further adapted to perform said step B2 of the method for enabling the voice interaction of a web page according to claim 14.

68. A computer program according to claim 67, **characterised in that** it is further adapted to perform said step B3 of the method for enabling the voice interaction of a web page according to claim 16.

69. A computer program according to any one of claims 63 to 68, **characterised in that** it is further adapted to perform said step B4 of the method for enabling the voice interaction of a web page according to claim 29.

70. A memory medium readable by a computer having a program stored therein, **characterised in that** said program is a computer program according to any one of claims 63 to 69.

71. A computer program **characterised in that characterised in that** it includes code means adapted to perform, when they operate on a computer, the steps of the method for enabling the voice interaction of a web page according to claim 37 or 38.

72. A memory medium readable by a computer having a program stored therein, **characterised in that** said program is a computer program according to claim 71.

## Patentansprüche

1. Verfahren zum Ermöglichen der Sprachinteraktion mit einer Webseite, deren Visualisierung durch eine entsprechende Visualisierungsdatei definiert wird, wobei das Verfahren die Erkennung eines Satzes in einem Tonsignal durch eine Sprache rkennungsmaschine umfasst, das in Nähe eines Mikrofon-Mittels emittiert wird, wobei das Verfahren **dadurch gekennzeichnet ist, dass** eine entsprechende Sprachkonfigurationsdatei, die eine Zustandsmaschine definiert, die einen oder mehrere Zustände umfasst, die einen Anfangszustand der Webseite enthalten, mit dieser Webseite in Beziehung gesetzt wird, wobei diese Sprachkonfigurationsdatei in jedem Zustand beinhaltet:
- ein oder mehrere erste Informationselemente, wobei sich jedes auf einen entsprechenden Satz bezieht, der durch die Spracherkennungsmaschine erkennbar ist, und, für jedes dieser ersten Informationselemente
- ein oder mehrere zweite Informationselemente, die sich auf einen oder mehrere entsprechende Befehle zur Interaktion mit der Webseite beziehen und/oder
- ein drittes Informationselement, das sich auf eine entsprechende Verbindung zu einer anderen Webseite bezieht und/oder
- ein viertes Informationselement, das einen entsprechenden Folgezustand identifiziert, wobei
das Verfahren die folgenden hintereinander ablaufenden Schritte beinhaltet:
A1 - Initialisieren einer aktuellen Zustandsvariable, zu dem Anfangszustand der Webseite,
B1 - Laden einer Grammatik entsprechend des aktuellen Zustands sowie einschließlich der erkennbaren Sätze in die Spracherkennungsmaschine,
C1 - Erkennen eines Satzes durch die Spracherken - nungsmaschine, der in Nähe des Mikrofon -Mittels gesprochen wird, unter den erkennbaren Sätzen entsprechend dem aktuellen Zustand,
D1 - beim Übereinstimmen eines oder mehrerer Interaktionsbefehle mit dem erkannten Satz, Ausführen dieser Befehle,
E1 - wenn ein Folgezustand mit dem erkannten Satz übereinstimmt, Aktualisieren der aktuellen Zustands - variable zu dem Folgezustand und Wiederholen der Verfahrensschritte, beginnend mit dem ersten Schritt, der nach dem Schritt A1 folgt.

2. Verfahren gemäß Anspruch 1, **gekennzeichnet dadurch, dass** es nach dem Schritt D1 den folgenden Schritt umfasst: F1 - wenn eine Verbindung zu einer anderen Webseite, zu der eine andere entsprechende Sprachkonfigura tionsdatei gehört, mit dem aktuellen Zustand übereinstimmt, werden alle Schritte des Verfahrens in Verbindung mit dieser anderen Webseite wiederholt.

3. Verfahren gemäß Anspruch 1 oder 2, **gekennzeichnet dadurch, dass** in Bezug auf mindestens einen Zustand mindestens eines der ersten Informationselemente mit dem entsprechenden Satz übereinstimmt, der durch die Spracherkennungsmaschine erkennbar ist.

4. Verfahren gemäß einem der vorhergehenden Ansprüche, **gekennzeichnet dadurch, dass** in Bezug auf mindestens einen Zustand ein oder mehrere der ersten Informationselemente Referenzen zu entsprechenden Sätzen sind, die durch die Spracherkennungsmaschine erkennbar sind und die in den entsprechenden ersten Dateien enthalten sind, wobei das Verfahren außerdem nach dem Schritt A1 und vor dem Schritt B1 den folgenden Schritt umfasst:
A2 - wenn eine oder mehrere Referenzen zu entsprechenden Sätzen, die in den entsprechenden ersten Dateien enthalten sind, mit dem aktuellen Zustand übereinstimmen, Abrufen der in den ersten Dateien enthaltenen erkennbaren Sätze durch die Spracherkennungsmaschine.

5. Verfahren gemäß Anspruch 4, **gekennzeichnet dadurch, dass** die ersten Dateien in einer einzelnen ersten Datei zusammenfallen.

6. Verfahren gemäß Anspruch 5, **gekennzeichnet dadurch , dass** die einzelne erste Datei die Visualisierungsdatei der Webseite ist.

7. Verfahren gemäß einem der vorhergehenden Ansprüche, **gekennzeichnet dadurch, dass** in Bezug auf mindestens eines der ersten Informationselemente von mindestens einem Zustand mindestens eines der Informationselemente mit den entsprechenden Befehlen für die Interaktion mit der Webseite übereinstimmt.

8. Verfahren gemäß einem der vorhergehenden Ansprüche, **gekennzeichnet dadurch, dass** in Bezug auf mindestens eines der ersten Informationselemente von mindestens einem Zustand ein oder mehrere der zweiten Informationselemente Referenzen zu einem oder mehreren entsprechenden Befehle zur Interaktion mit der Webseite sind, die in entsprechenden zweiten Dateien enthalten sind, wobei das Verfahren außerdem nach dem Schritt C1 und vor dem Schritt D1 den folgenden Schritt umfasst:
C2 - wenn eine oder mehrere Referenzen zu einem oder mehreren Befehlen zur Interaktion mit der Webseite übereinstimmen, die in den entsprechenden zweiten Dateien enthalten ist, mit dem erkennbaren Satz übereinstimmen, Abrufen der Interaktions - befehle von den zweiten Dateien, die sich darin befinden.

9. Verfahren gemäß Anspruch 8, **gekennzeichnet dadurch, dass** die zweiten Dateien in einer einzelnen zweiten Datei zusammenfallen.

10. Verfahren gemäß Anspruch 9, **gekennzeichnet dadurch, dass** die einzelne zweite Datei die Visualisierungsdatei der Webseite ist.

11. Verfahren gemäß einem der vorhergehenden Ansprüche, **gekennzeichnet dadurch, dass** in Bezug auf mindestens eines d er ersten Informationselemente von mindestens einem Zustand das dritte Informationselement mit der entsprechenden Verbindung zu einer anderen Webseite übereinstimmt.

12. Verfahren gemäß einem der vorhergehenden Ansprüche, **gekennzeichnet dadurch, dass** in Bezug auf mindestens eines der ersten Informationselemente von mindestens einem Zustand das dritte Informationselement eine Referenz zu einer entsprechenden Verbindung zu einer anderen Webseite ist, die in einer entsprechenden dritten Datei enthalten ist.

13. Verfahren gemäß Anspruch 12, **gekennzeichnet dadurch, dass** die dritte Datei die Visualisierungsdatei der Webseite ist.

14. Verfahren gemäß einem der vorhergehenden Ansprüche, **gekennzeichnet dadurch, dass** die Sprachkonfigurations - datei in Bezug auf mindestens einen Zustand außerdem enthält:
- ein oder mehrere fünfte Informationselemente, jedes bezogen auf einen entsprechenden Text, der stimmlich zu synthetisieren ist, wobei
das Verfahren außerdem nach dem Schritt A1 den folgenden Schritt umfasst:
B2 - wenn ein oder mehrere zu synthetisierende Texte mit dem aktuellen Zustand übereinstimmen, stimmliches Synthetisieren von mindestens einem der Texte durch eine Sprach-Synthese-Maschine.

15. Verfahren gemäß Anspruch 14, **gekennzeichnet dadurch,**
**dass** in Bezug au f mindestens einen Zustand, mindestens eines der fünften Informationselemente mit dem entsprechenden Text, der zu synthetisieren ist, übereinstimmt.

16. Verfahren gemäß Anspruch 14 oder 15, **gekennzeichnet dadurch, dass** in Bezug auf mindestens einen Zustand ein oder mehrere der fünften Informationselemente Referenzen zu entsprechenden Texten sind, die stimmlich zu synthetisieren und in entsprechenden vierten Dateien enthalten sind, wobei das Verfahren außerdem nach dem Schritt A1 und vor dem Schritt B2 den folgenden Schritt umfasst:
B3 - wenn eine oder mehrere Referenzen zu ent - sprechenden Texten, die stimmlich zu synthetisieren sind und in entsprechenden vierten Dateien enthalten sind, mit dem aktuellen Zustand übereinstimmen, Abrufen der stimmlich zu synthetisierenden Texte, die in den vierten Dateien enthalten sind.

17. Verfahren gemäß Anspruch 16, **gekennzeichnet dadurch, dass** die vierten Dateien in einer einzelnen vierten Datei zusammenfallen.

18. Verfahren gemäß Anspruch 17, **gekennzeichnet dadurch, dass** die einzelne vierte Datei die Visualisierungsdatei der Webseite ist.

19. Verfahren gemäß einem der vorhergehenden Ansprüche, **gekennzeichnet dadurch, dass** in Bezug auf jeden Zustand die Sprachkonfigurationsdatei gemäß der Datenstruktur aufgebaut ist und beinhaltet:
- einen ersten Abschnitt (ASR) für die Spracherkennung, einschließlich einem oder mehrerer erster Unter - abschnitte, wobei jeder das Folgende beinhaltet:
a) eines der ersten Informationselemente in Bezug auf entsprechende Sätze, die durch die S pracherkennungsmaschine erkennbar sind,
b) einen alphanumerischer Identifikationscode
- einen zweiten Abschnitt (CMD) für Interaktionsbefehle, einschließlich einem oder mehrerer zweiter Unterabschnitte, wobei jeder eines der zweiten Informationselemente beinhaltet, die sich auf die entsprechenden Interaktionsbefehle mit der Webseite beziehen, wobei
der alphanumerische Identifikationscode enthält:
b1) das vierte Informationselement in alpha - numerischem Format, das den Folgezustand identifiziert, entsprechend dem erkennbaren Satz aus dem ersten Unterabschnitt, und
b2) einen ersten alphanumerischen Untercode, der mindestens einen zweiten Unterabschnitt des zweiten Abschnitts (CMD) der Interaktionsbefehle des aktuellen Zustands oder des Folgezustands identifiziert.

20. Verfahren gemäß Anspruch 19, **gekennzeichnet dadurch, dass** mindestens ein zweiter Unterabschnitt des zweiten Abschnitts (CMD) der Interaktionsbefehle leer ist.

21. Verfahren gemäß Anspruch 19 oder 20, **gekennzeichnet dadurch, dass** mindestens e in Unterabschnitt des zweiten Abschnitts (CMD) der Interaktionsbefehle einen Befehl zur Verbindung zu einer anderen Webseite enthält.

22. Verfahren gemäß einem der Ansprüche 14 bis 18 und gemäß einem der Ansprüche 19 bis 21, **gekennzeichnet dadurch, dass** die Datenstruktur, gemäß der die Sprach - konfigurationsdatei in Bezug auf jeden Zustand aufgebaut ist, außerdem umfasst:
- einen dritten Abschnitt (TTS) für Sprachsynthese, der einen oder mehrere dritte Unterabschnitte umfasst, wobei jeder mindestens eines der fünften Informationselemente in Bezug auf die entsprechenden zu synthetisierenden Texte beinhaltet.

23. Verfahren gemäß Anspruch 22, **gekennzeichnet dadurch, dass** der alphanumerische Identifikationscode außerdem umfasst:
b3) einen zweiten alphanumerischen Untercode, der mindestens einen dritten Unterabschnitt des dritten Abschnittes (TTS) für Sprachsynthese des aktuellen Zustands oder des Folgezustands identifiziert.

24. Verfahren gemäß Anspruch 22 oder 23, **gekennzeichnet dadurch, dass** mindestens ein d ritter Unterabschnitt des dritten Abschnittes (TTS) für Sprachsynthese leer ist.

25. Verfahren gemäß einem der Ansprüche 14 bis 18 und gemäß einem der Ansprüche 19 bis 24, **gekennzeichnet dadurch, dass** die Datenstruktur, gemäß der die Sprachkonfigura - tionsdatei in Bezug auf jeden Zustand aufgebaut ist, außerdem umfasst:
- einen vierten Abschnitt (ADV) für Werbemitteilungen, der einen oder mehrere vierte Unterabschnitte umfasst, wobei jeder mindestens eines der fünften Informationselemente in Bezug auf die entsprechenden zu synthetisierenden Texte beinhaltet.

26. Verfahren gemäß Anspruch 25, **gekennzeichnet dadurch, dass** der alphanumerische Identifikationscode außerdem umfasst:
b4) einen dritten alphanumerischen Untercode, der mindestens einen vierten Unterabschnitt des vierten Abschnitts (AVD) für stimmliche Werbemitteilungen des aktuellen Zustands oder des Folgezustands identifiziert.

27. Verfahren gemäß Anspruch 25 oder 26, **gekennzeichnet dadurch, dass** mindestens ein vierter Unterabschnitt des vierten Abs chnitts (AVD) für stimmliche Werbemitteilungen leer ist.

28. Verfahren gemäß einem der vorhergehenden Ansprüche, **gekennzeichnet dadurch, dass** die Visualisierungsdatei und die Sprachkonfigurationsdatei auf einem Server gespeichert werden, auf den durch ein Telekommunikationsnetzwerk durch mindestens einen Benutzer-Client zugegriffen werden kann, wobei das Verfahren außerdem umfasst, dass bei Abfrage einer Webseite durch einen Client, der mit dem Mikrofon -Mittel und mit einer Spracherkennungsmaschine ausgestattet ist, vor Schritt C1 die folgenden Schritte erfolgen:
AO.1 - Übertragen der Visualisierungsdatei der abgefragten Webseite vom Server zum Client,
AO.2 - Visualisieren der Webseite beim Client, und vor Schritt A1 erfolgt der folgende Schritt:
AO.3 - Übertragen der Sprachkonfigurationsdatei der abgefragten Webseite vom Server zum Client, und nach Schritt D1 erfolgt der folgende Schritt:
F2 - wenn eine Verbindung zu einer anderen Webseite mit dem aktuellen Zustand übereinstimmt, fragt der Client die andere Webseite vom Server ab.

29. Verfahren gemäß Anspruch 28, **gekennzeichnet dadurch, dass** die Sprachkonfigurationsdatei außerdem in Bezug auf mindestens einen Zustand umfasst:
- ein oder mehrere sechste Informationselemente, wobei sich jedes auf eine entsp rechende zu visualisierende grafische Schnittstelle bezieht, wobei
das Verfahren außerdem nach Schritt A1 den folgenden Schritt umfasst:
B4 - wenn eine oder mehrere grafische Schnittstellen dem aktuellen Zustand entsprechen, wird mindestens eine der grafischen Schnittstellen auf dem Client visualisiert.

30. Verfahren gemäß Anspruch 29, **dadurch gekennzeichnet,**
**dass** mindestens eine der zu visualisierenden grafischen Schnittstellen eine animierte grafische Schnittstelle umfasst und dass das entsprechende sechste Informa - tionselement die zugehörigen Bewegungsbefehle umfasst.

31. Verfahren gemäß Anspruch 29 oder 30, **dadurch gekennzeichnet, dass** mindestens eine der zu visualisierenden grafischen Schnittstellen einen Text enthält.

32. Verfahren gemäß einem der Ansprüche 19 bis 27 und gemäß Anspruch 30, **gekennzeichnet dadurch, dass** die Datenstruktur, gemäß der die Konfigurationsdatei in Bezug auf jeden Zustand aufgebaut ist, außerdem umfasst: - einen fünften Abschnitt (MOV) für Bewegungsbefehle, der einen oder mehrere fünfte Unterabschnitte umfasst, wobei jeder mindestens eines der sechsten Informa - tionselemente in Bezug auf die Bewegungsbefehle einer entsprechenden animierten grafischen Schnittstelle beinhaltet.

33. Verfahren gemäß Anspruch 32, **gekennzeichnet dadurch, dass** jeder fünfte Unterabschnitt des fünften Abschnitts (MOV) ein Informationselement in Bezug auf die Ankunftsposition und ein Informationselement in Bezug auf die Bewegungsgeschwindigkeit der animierten grafischen Schnittstelle enthält.

34. Verfahren gemäß Anspruch 32 oder 33, **gekennzeichnet dadurch, dass** der alphanumerische Identifikationscode außerdem umfasst:
b5) einen vierten alphanumerischen Identifikations - Untercode zur Identifikation von mindestens einem fünften Unterabschnitt des fünften Abschnitts (MOV) der Bewegungsbefehle des aktuellen Zustands oder des Folgezustands.

35. Verfahren gemäß einem der Ansprüche 32 bis 34, **gekennzeichnet dadurch, dass** mindestens ein fünfter Unterabschnitt des fünften Abschnitts (MOV) der Bewegungsbefehle leer ist.

36. Verfahren gemäß einem der Ansprüche 28 bis 35, **gekennzeichnet dadurch, dass** das Telekommunikations - netzwerk das Internet-Netzwerk ist.

37. Verfahren gemäß einem der Ansprüche 14 bis 18 oder entsprechend einem der Ansprüche 22 bis 27, **gekennzeichnet dadurch, dass** die Visualisierungsdatei und die Sprachkonfigurationsdatei auf dem Server gespeichert werden, auf den mittels eines Telefon - netzwerks durch mindestens eine Benutzer -Telefonvorrichtung zugegriffen werden kann, wobei der Server mit mindestens einer Sprach -Synthese-Maschine und einer Spracherkennungsmaschine ausgestattet ist, wobei die Benutzer-Telefonvorrichtung mit Mikrofon -Mitteln als auch mit Tonreproduktionsmitteln zur stimmlich synthetisierten Reproduktion von Texten durch die Sprach-Synthese-Maschine ausgestattet ist.

38. Verfahren gemäß Anspruch 37, **gekennzeichnet dadurch, dass** das Telefonnetzwerk ein zellulares Funktelefon - netzwerk ist und dass die Benutzer -Telefonvorrichtung eine zellulare Funktelefonvorrichtung ist.

39. Verfahren zum Ermöglichen der Sprachinteraktion einer Website, die eine oder mehrere Webseiten umfasst, wobei die Visualisierung jeder Webseite durch eine entsprechende Visualisierungsdatei definiert wird, wobei das Verfahren in Bezug auf mindestens eine Seite der Website **gekennzeichnet ist durch** das Ausführen des Verfahrens zum Ermöglichen der Sprachinteraktion einer Webseite gemäß einem der vorhergehenden Ansprüche 1 bis 27.

40. Verfahren gemäß Anspruch 39, **gekennzeichnet dadurch, dass** die Visualisierungsdate ien und die Sprachkonfigu - rationsdateien der Webseiten auf einem Server gespeichert sind, auf den mindestens ein Benutzer -Client mittels eines Telekommunikationsnetzwerks zugreifen kann und dass das Verfahren in Bezug auf mindestens eine Seite der Website das Verfahren zum Ermöglichen der Sprachinteraktion einer Webseite gemäß einem der vorhergehenden Ansprüche 28 bis 36 ausführt.

41. Verfahren gemäß Anspruch 40, **gekennzeichnet dadurch, dass** es außerdem vor dem Schritt AO.3 den folgenden Schritt umfasst:
AO.0 Überprüfen, ob eine Sprachkonfigurationsdatei auf der abgefragten Webseite besteht, wobei das Verfahren die Schritte des Verfahrens zur Ermöglichung der Sprachinteraktion einer Webseite nur ausführt, wenn das Ergebnis des Schritts AO.0 positiv ist.

42. Verfahren gemäß Anspruch 41, **gekennzeichnet dadurch, dass** falls das Ergebnis der Überprüfung des Schritts AO.0 negativ ist, das Verfahren den folgenden Schritt ausführt:
F3 - Signalisieren durch den Client, dass die abgefragte Webseite nicht für Sprachin teraktion freigegeben ist.

43. Verfahren gemäß Anspruch 42, **gekennzeichnet dadurch, dass** der Schritt F3 aus der Sprachsynthese einer Mitteilung besteht, die durch die Sprach -Synthese-Maschine herbeigeführt wird.

44. Verfahren gemäß Anspruch 43, **gekennzeichnet dadurch, dass** die Visualisierungsdateien und die Sprachkonfigura - tionsdateien der Webseiten der betreffenden Stelle auf einem Server gespeichert werden, auf den mittels eines Telefonnetzwerks durch mindestens eine Benutzer - Telefonvorrichtung zugegriffen werden kann und dass das Verfahren in Bezug auf mindestens eine Seite der Website das Verfahren zum Ermöglichen der Sprachinteraktion einer Webseite gemäß einem der vorhergehenden Ansprüche 37 oder 38 ausführt.

45. Computer, in dem eine oder mehrere W ebseiten-Visualisierungsdateien gespeichert sind, **gekennzeichnet dadurch, dass** darin außerdem gespeichert sind: für mindestens eine Webseite, in Bezug auf welche die zugehörige Visualisierungsdatei im Computer gespeichert ist, eine entsprechende Sprachkonf igurationsdatei, die angepasst wurde, um die Sprachinteraktion einer Webseite zu ermöglichen gemäß dem Verfahren zur Ermöglichung der Sprachinteraktion einer Webseite gemäß einem der vorhergehenden Ansprüche 1 bis 27.

46. Computer gemäß Anspruch 45, **gekennzeichnet dadurch, dass** darin die Sprachkonfigurationsdateien der Webseiten gespeichert sind, die zu einer einzelnen Website gehören, gemäß der gleichen Datenstruktur, durch die die Visualisierungsdateien der Webseite der betreffenden Stelle gespeichert sind.

47. Computer gemäß Anspruch 45 oder 46, **gekennzeichnet dadurch, dass** er ein Server ist, auf den durch mindestens einen Benutzer -Client durch ein Telekommuni - kationsnetzwerk zugegriffen werden kann, der eine Webseite abfragt, deren Visualisierungsdatei auf dem Server gespeichert ist, und außerdem **dadurch gekennzeichnet, dass** er angepasst ist, als Antwort auf einen Client, der eine Webseite abfragt, deren entsprechende Visualisierungsdatei im Computer gespeichert ist, den Schritt AO.3 gemäß dem Verfahren zum Ermöglichen der Sprachinteraktion einer Webseite gemäß einem der vorhergehenden Ansprüche 28 bis 36 auszuführen.

48. Benutzer-Computer oder Client, der mit einem Mikrofon - Mittel und mit einer Sprach -Synthese-Maschine ausgestattet ist, angepasst, um gemäß Anspruch 47 durch ein Telekommunikationsnetzwerk auf einen Server zuzugreifen, um eine Webseite abzufragen, deren entsprechende Sprachkonfigurationsdatei auf dem Server gespeichert ist, **gekennzeichnet dadurch, dass** er angepasst ist, um die Schritte AO .2, A1, B1, C1, D1, E1 und F2 des Verfahrens zur Ermöglichung der Sprachinteraktion einer Webseite gemäß einem der Ansprüche 28 bis 36 auszuführen.

49. Benutzer-Computer oder Client gemäß des Anspruchs 48, **gekennzeichnet dadurch, dass** er weiter angepasst ist, um den Schritt F1 des Verfahrens zur Ermöglichung der Sprachinteraktion einer Webseite gemäß Anspruch 2 auszuführen.

50. Benutzer-Computer oder Client gemäß Anspruch 48 oder 49, **gekennzeichnet dadurch, dass** er weiter angepasst ist, um den Schritt A2 des Verfahrens zur Ermöglichung der Sprachinteraktion einer Webseite gemäß Anspruch 4 auszuführen.

51. Benutzer-Computer oder Client gemäß einem der Ansprüche 48 bis 50, **gekennzeichnet dadurch, dass** er weiter angepasst ist, um den Schritt C2 des Verfahren s zur Ermöglichung der Sprachinteraktion einer Webseite gemäß Anspruch 8 auszuführen.

52. Benutzer-Computer oder Client gemäß einem der Ansprüche 48 bis 50, **gekennzeichnet dadurch, dass** er weiter angepasst ist, um den Schritt B2 des Verfahrens zur Ermöglichung der Sprachinteraktion einer Webseite gemäß Anspruch 14 auszuführen.

53. Benutzer-Computer oder Client gemäß Anspruch 52, **gekennzeichnet dadurch, dass** er weiter angepasst ist, um den Schritt B3 des Verfahrens zur Ermöglichung der Sprachinteraktion ei ner Webseite gemäß Anspruch 16 auszuführen.

54. Benutzer-Computer oder Client gemäß einem der Ansprüche 48 bis 53, **gekennzeichnet dadurch, dass** er weiter angepasst ist, um den Schritt B4 des Verfahrens zur Ermöglichung der Sprachinteraktion einer Webseite gemäß Anspruch 29 auszuführen.

55. Benutzer-Computer gemäß Anspruch 45 oder 46, **gekennzeichnet dadurch, dass** er ein Server ist, auf den durch mindestens eine Benutzer -Telefonvorrichtung durch ein Telefonnetzwerk zugegriffen werden kann und dass er mit ei ner Sprach -Synthese-Maschine und einer Spracherkennungsmaschine ausgestattet ist und dass er außerdem **dadurch gekennzeichnet ist, dass** er weiter angepasst ist, um die Schritte des Verfahrens zur Ermöglichung der Sprachinteraktion einer Webseite gemäß Anspruch 37 oder 38 auszuführen.

56. Elektrisches, magnetisches oder elektromagnetisches Signal, **dadurch gekennzeichnet, dass** es mindestens eine Sprachkonfigurationsdatei einer Webseite beinhaltet, angepasst um die Sprachinteraktion der Webseite gemäß dem Verfahren zur Ermöglichung der Sprachinteraktion einer Webseite gemäß einem der Ansprüche 1 bis 27 zu ermöglichen.

57. Elektrisches, magnetisches oder elektromagnetisches Signal gemäß Anspruch 56, **dadurch gekennzeichnet, dass** mindestens eine Sprachkonfigurationsdatei einer Webseite angepasst ist, um die Sprachinteraktion der Webseite gemäß dem Verfahren zur Ermöglichung der Sprachinteraktion einer Webseite gemäß einem der Ansprüche 29 bis 35 zu ermöglichen.

58. Speichermedium, lesbar durch einen Computer, **dadurch gekennzeichnet, dass** es mindestens eine Sprachkonfigu - rationsdatei einer Webseite beinhaltet, angepasst um die Sprachinteraktion einer Webseite gemäß dem Verfahren zur Ermöglichung der Sprachinteraktion einer Webseite gemäß einem der Ansprüche 1 bis 27 zu ermöglichen.

59. Speichermedium gemäß Anspruch 58, **gekennzeichnet dadurch, dass** mindestens eine Sprachkonfigurationsdatei einer Webseite angepasst ist, um die Sprachinteraktion einer Webseite gemäß dem Verfahren zur Ermöglichung der Sprachinteraktion einer Webseite gemäß einem der Ansprüche 29 bis 35 zu ermöglichen.

60. Speichermedium gemäß Anspruch 58 oder 59, **dadurch gekennzeichnet, dass** in ihm die Sprachkonfigurations - dateien von Webseiten gespeichert sind, die zu einer einzelnen Website gehören, gemäß der gleichen Datenstruktur, nach der die Visualisierungsdateien der Webseite der betreffenden Seite gespeichert sind.

61. Computerprogramm, **dadurch gekennzeichnet, dass** es Code - Mittel beinhaltet, die beim Betrieb auf einem Computer zur Ausführung des Schrittes AO.3 des Verfahrens zur Ermöglichung der Sprachinteraktion einer Webseite gemäß einem der Ansprüche 28 bis 36 angepasst sind.

62. Speichermedium, lesbar durch einen Computer, auf dem ein Programm gespeichert ist, **gekennzeichnet dadurch**, das s das Programm ein Computerprogramm gemäß Anspruch 61 ist.

63. Computerprogramm, **gekennzeichnet dadurch, dass** es Code - Mittel beinhaltet, die beim Betrieb auf einem Computer zur Ausführung des Schrittes AO.2, A1, B1, C1, D1, E1 und F2 des Verfahrens zur Er möglichung der Sprachinteraktion einer Webseite gemäß einem der Ansprüche 28 bis 36 angepasst sind.

64. Computerprogramm gemäß Anspruch 63, **gekennzeichnet dadurch, dass** es außerdem Code -Mittel beinhaltet, die beim Betrieb auf einem Computer zur Ausführung des Schrittes F1 des Verfahrens zur Ermöglichung der Sprachinteraktion einer Webseite gemäß Anspruch 2 angepasst sind.

65. Computerprogramm gemäß Anspruch 63 oder 64, **gekennzeichnet dadurch, dass** es weiter angepasst ist, um den Schritt A2 des Verfahrens zur Ermöglichung der Sprachinteraktion einer Webseite gemäß Anspruch 4 auszuführen.

66. Computerprogramm gemäß einem der Ansprüche 63 bis 65, **gekennzeichnet dadurch, dass** es weiter angepasst ist, um den Schritt C2 des Verfahrens zur Ermöglichung der Sprachinteraktion einer Webseite gemäß Anspruch 8 auszuführen.

67. Computerprogramm gemäß eine der Ansprüche 63 bis 66, **gekennzeichnet dadurch, dass** es weiter angepasst ist, um den Schritt B2 des Verfahrens zur Ermöglichung der Sprachinteraktion einer Webseite gemäß Anspruch 14 auszuführen.

68. Computerprogramm gemäß Anspruch 67, **gekennzeichnet dadurch, dass** es weiter angepasst ist, um den Schritt B3 des Verfahrens zur Ermöglichung der Sprachinteraktion einer Webseite gemäß Anspruch 16 auszuführen.

69. Computerprogramm gemäß einem der Ansprüche 63 bis 68, **gekennzeichnet dadurch, dass** es weiter angepasst ist, um den Schritt B4 des Verfahrens zur Ermöglichung der Sprachinteraktion einer Webseite gemäß Anspruch 29 auszuführen.

70. Speichermedium, lesbar durch einen Computer, auf dem ein Programm gespeichert ist, **gekennzeichnet dadurch, dass** das Programm ein Computerprogramm, gemäß einem der Ansprüche 63 bis 69 ist.

71. Computerprogramm, **gekennzeichnet dadurch, dass** es Code - Mittel beinhaltet, die beim Betrieb auf einem Computer zur Ausführung der Schritte des Verfahrens zur Ermöglichung der Sprachinteraktion einer Webseite gemäß Anspruch 37 oder 38 angepasst sind.

72. Speichermedium, lesbar durch einen Computer, auf dem ein Programm gespeichert ist, **gekennzeichnet dadurch, dass** das Programm ein Computerprogramm gemäß Anspruch 71 ist.

## Revendications

1. Procédé pour permettre l'interaction vocale d'une page Web, dont la visualisation est définie par un fichier de visualisation correspondant, le procédé comprenant la reconnaissance par une machine de reconnaissance vocale d'une phrase dans un signal sonore émis à proximité d'un microphone, le procédé étant **caractérisé en ce qu'**un fichier de configuration vocale correspondant, définissant une machine d'état comprenant un ou plusieurs états comprenant un état initial de la page Web, est associé à ladite page Web, ledit fichier de configuration vocale comprenant, pour chaque état :
- un ou plusieurs premiers éléments d'informations, liés chacun à une phrase correspondante reconnaissable par ladite machine de reconnaissance vocale et, pour chacun desdits premiers éléments d'informations,
- un ou plusieurs deuxièmes éléments d'informations liés à une ou plusieurs commandes correspondantes pour interagir avec ladite page Web, et/ou
- un troisième élément d'informations lié à une connexion correspondante vers une autre page Web, et/ou
- un quatrième élément d'informations identifiant un état suivant correspondant,
le procédé comprenant les étapes successives suivantes :
A1 - initialiser une variable d'état actuel en l'état initial de la page Web,
B1 - charger une grammaire correspondant à l'état actuel et comprenant lesdites phrases reconnaissables dans ladite machine de reconnaissance vocale,
C1 - reconnaître, au moyen de ladite machine de reconnaissance vocale, une phrase prononcée à proximité dudit microphone parmi lesdites phrases reconnaissables correspondant à l'état actuel,
D1 - lorsqu'une ou plusieurs commandes d'interaction correspondent à la phrase reconnue, exécuter de telles commandes,
E1 - lorsqu'un état suivant correspond à la phrase reconnue, mettre à jour la variable d'état actuel en l'état suivant et répéter les étapes du procédé à partir de la première étape suivant l'étape A1.

2. Procédé selon la revendication 1, **caractérisé en ce qu'**il comprend en outre, après l'étape D1, l'étape suivante :
F1 - lorsqu'une connexion à une autre page Web sur laquelle un autre fichier de configuration vocale correspondant est associé correspond à l'état actuel, répéter toutes les étapes du procédé en rapport avec l'autre page Web.

3. Procédé selon la revendication 1 ou 2, **caractérisé en ce que**, par rapport à au moins un état, au moins l'un desdits premiers éléments d'informations coïncide avec la phrase correspondante reconnaissable par ladite machine de reconnaissance vocale.

4. Procédé selon l'un e quelconque des revendications précédentes, **caractérisé en ce que**, par rapport à au moins un état, un ou plusieurs desdits premiers éléments d'informations sont des références à des phrases correspondantes reconnaissables par ladite machine de reconnaissance vocale et sont comprises dans les premiers fichiers correspondants, ledit procédé comprenant en outre, après l'étape A1 et avant l'étape B1, l'étape suivante :
A2 - lorsqu'une ou plusieurs références à des phrases correspondantes comprises dans des premiers fichiers correspondent à l'état actuel, extraire desdits premiers fichiers les phrases reconnaissables par ladite machine de reconnaissance vocale comprises dans ceux-ci.

5. Procédé selon la revendication 4, **caractérisé en ce que** lesdits premiers fi chiers coïncident en un seul premier fichier.

6. Procédé selon la revendication 5, **caractérisé en ce que** ledit seul premier fichier est le fichier de visualisation de la page Web.

7. Procédé selon l'une quelconque des revendications précédentes, **caractérisé en ce que**, par rapport à au moins l'un desdits premiers éléments d'informations d'au moins un état, au moins l'un desdits éléments d'informations coïncide avec les commandes correspondantes pour une interaction avec la page Web.

8. Procédé selon l'un e quelconque des revendications précédentes, **caractérisé en ce que**, par rapport à au moins l'un desdits premiers éléments d'informations d'au moins un état, un ou plusieurs desdits seconds éléments d'informations sont des références à une ou plusieurs commandes correspondantes pour une interaction avec la page Web comprise dans les seconds fichiers correspondants, le procédé comprenant en outre, après ladite étape C1 et avant l'étape D1, l'étape suivante :
C2 - lorsqu'une ou plusieurs références vers une ou plusieurs commandes correspondantes pour une interaction avec la page Web comprise dans les seconds fichiers correspondants correspondent à la phrase reconnue, extraire depuis lesdits seconds fichiers les commandes d'interaction comprises dans ceux-ci.

9. Procédé selon la revendication 8, **caractérisé en ce que** lesdits seconds fichiers coïncident en un seul second fichier.

10. Procédé selon la revendication 9, **caractérisé en ce que** ledit seul second fichier est le fichier de visualisation de la page Web.

11. Procédé selon l'une quelconque des revendications précédentes, **caractérisé en ce que**, par rapport à au moins l'un desdits premiers éléments d'informations d'au moins un état, ledit troisième élément d'informations coïncide avec la connexion correspondante vers une autre page Web.

12. Procédé selon l'une quelconque des revendications précédentes, **caractérisé en ce que**, par rapport à au moins l'un desdits premiers éléments d'informations d'au moins un état, ledit troisième élément d'informations est une référence à une connexion correspondante vers une autre page Web comprise dans un troisième fichier correspondant.

13. Procédé selon la revendication 12, **caractérisé en ce que** ledit troisième fichier est le fichier de visualisation de la page Web.

14. Procédé selon l'une quelconque des revendications précédentes, **caractérisé en ce que** le fichier de configuration vocale comprend également, par rapport à au moins un état :
- un ou plusieurs cinquièmes éléments d'informations, liés chacun à un texte corres pondant à synthétiser vocalement,
ledit procédé comprenant en outre après ladite étape A1 l'étape suivante :
B2 - lorsqu'un ou plusieurs textes à synthétiser correspondent à l'état actuel, synthétiser vocalement au moins l'un desdits textes au moyen d'une machine de synthèse vocale.

15. Procédé selon la revendication 14, **caractérisé en ce que**, par rapport à au moins un état, au moins l'un desdits cinquièmes éléments d'informations coïncide avec le texte correspondant à synthétiser vocalement.

16. Procédé selon la revendication 14 ou 15, **caractérisé en ce que**, par rapport à au moins un état, un ou plusieurs desdits cinquièmes éléments d'informations sont des références à des textes correspondants à synthétiser vocalement compris dans des quatrièmes fichier s correspondants, le procédé comprenant en outre, après ladite étape A1 et avant ladite étape B2, l'étape suivante :
B3 - lorsqu'une ou plusieurs références à des textes correspondants à synthétiser vocalement compris dans des quatrièmes fichiers correspondants correspondent à l'état actuel, extraire depuis lesdits quatrièmes fichiers les textes à synthétiser vocalement compris dans ceux-ci.

17. Procédé selon la revendication 16, **caractérisé en ce que** lesdits quatrièmes fichiers coïncident en un seul quatrième fichier.

18. Procédé selon la revendication 17, **caractérisé en ce que** ledit seul quatrième fichier est le fichier de visualisation de la page Web.

19. Procédé selon l'une quelconque des revendications précédentes, **caractérisé en ce que**, par rapport à chaque état, le fichier de configuration vocale est organisé selon une structure de données comprenant :
- une première section (ASR) pour une reconnaissance vocale, comprenant une ou plusieurs premières sous - sections, chacune comprenant :
a) l'un desdits premiers éléments d'informations liés à des phrases correspondantes reconnaissables par ladite machine de reconnaissance vocale,
b) un code d'identification alphanumérique,
- une seconde section (CMD) pour des commandes d'interaction, comprenant une ou plusieurs secondes sous-sections, chacune comprenant l'un desdits seconds éléments d'informations liés aux dites commandes correspondantes pour une interaction avec la page Web, ledit code d'identification alphanumérique comprenant :
b1) ledit quatrième élé ment d'informations, en format alphanumérique, identifiant l'état suivant correspondant à la phrase reconnaissable de la même première sous - section, et
b2) un premier sous -code alphanumérique identifiant au moins une seconde sous-section de la seconde section (CMD) des commandes d'interaction de l'état actuel ou de l'état suivant.

20. Procédé selon la revendication 19, **caractérisé en ce qu'**au moins une seconde sous -section de la seconde section (CMD) des commandes d'interaction est vide.

21. Procédé selon la revendication 19 ou 20, **caractérisé en ce qu'**au moins une seconde sous -section de la seconde section (CMD) des commandes d'interaction comprend une commande pour une connexion à une autre page Web.

22. Procédé selon l'une quelconque des revendications 14 à 18 et selon l'une quelconque des revendications 19 à 21, **caractérisé en ce que** ladite structure de données selon laquelle le fichier de configuration vocale par rapport à chaque état est organisé comprend en outre :
- une troisième section (TTS) pour une synthèse vocale, comprenant une ou plusieurs troisièmes sous -sections, chacune comprenant au moins l'un desdits cinquièmes éléments d'informations liés aux dits textes correspondants à synthétiser.

23. Procédé selon la revendication 22, **caractérisé en ce que** ledit code d'identification alphanumérique comprend en outre :
b3) un second sous -code alphanumérique identifiant au moins une troisième sous -section de la troisième section (TTS) pour une synthèse vocale de l'état actuel ou de l'état suivant.

24. Procédé selon la revendication 22 ou 23, **caractérisé en ce que** au moins une troisième sous -section de la troisième section (TTS) pour une synthèse vocale est vide.

25. Procédé selon l'une quelconque des revendications 14 à 18 et selon l'une quelconque des revendications 19 à 24, **caractérisé en ce que** ladite structure de données selon laquelle le fichier de configuration vocale par rapport à chaque état est organisé comprend en outre :
- une quatrième section (ADV) pour des messages publicitaires, comprenant une ou plusieurs quatrièmes sous-sections, chacune comprenant au moins l'un desdits cinquièmes éléments d'informations liés aux dits textes correspondants à synthétiser.

26. Procédé selon la revendication 25, **caractérisé en ce que** ledit code d'identi fication alphanumérique comprend en outre :
b4) un troisième sous-code alphanumérique identifiant au moins une quatrième sous -section de la quatrième section (ADV) pour des messages publicitaires vocaux de l'état actuel ou de l'état suivant.

27. Procédé selon la revendication 25 ou 26, **caractérisé en ce que** au moins une quatrième sous -section de la quatrième section (ADV) pour les messages publicitaires est vide.

28. Procédé selon l'une quelconque des revendications précédentes, **caractérisé en ce que** le fichier de visualisation et le fichier de configuration vocale sont stockés sur un serveur, accessible par un réseau de télécommunication par au moins un client utilisateur, ledit procédé comprenant en outre, pour une demande de page Web par un client fournie avec ledit microphone et avec une machine de reconnaissance vocale,
avant ladite étape C1, les étapes suivantes :
A0.1 - transmettre le fichier de visualisation de la page Web demandée depuis ledit serveur au dit client,
A0.2 - visualiser ladite page Web sur ledit client, et avant ladite étape A1, l'étape suivante :
A0.3 - transmettre le fichier de configuration vocale de la page Web demandée depuis ledit serveur au dit client, et
après ladite étape D1, l'étape suivante :
F2 - lorsqu'une connexion à une autre page Web correspond à l'état actuel, ledit client demande ladite autre page Web depuis ledit serveur.

29. Procédé selon la revendication 28, **caractérisé en ce que** ledit fichier de configuration vocale comprend en outre, par rapport à au moins un état :
- un ou plusieurs sixièmes éléments d'informations, liés chacun à une interface graphique correspondante à visualiser,
le procédé comprenant en outre, après l'étape A1, l'étape suivante :
B4 - lorsqu'une ou plusieurs interfaces graphiques correspondent à l'état actuel, visualiser au moins l'une desdites interfaces graphiques sur ledit client.

30. Procédé selon la revendication 29, **caractérisé en ce que** au moins l'une desdites interfaces graphiques à visualiser comprend une interface graphique animée et **en ce que** le sixième élément d'informations correspondant comprend les commandes de mouvement associées.

31. Procédé selon la revendication 29 ou 30, **caractérisé en ce que** au moins l'une desdites interfaces graphiques à visualiser comprend un texte.

32. Procédé selon l'une quelconque des revendications 19 à 27 et selon la revendication 30, **caractérisé en ce que** ladite structure de données, selon laquelle ledit fichier de configuration vocale est organisé par rapport à chaque état, comprend en outre :
- une cinquième section (MOV) pour des commandes de mouvement, comprenant une ou plusieurs cinquièmes sous - sections, chacune comprenant au moins l'un desdits sixièmes éléments d'informations liés aux dites commandes de mouvement d'une interface graphique an imée correspondante.

33. Procédé selon la revendication 32, **caractérisé en ce que** chaque cinquième sous -section de ladite cinquième section (MOV) comprend un élément d'informations lié à la position d'arrivée et un élément d'informations lié à la vitesse de mouvement de ladite interface graphique animée.

34. Procédé selon la revendication 32 ou 33, **caractérisé en ce que** ledit code d'identification alphanumérique comprend en outre :
b5) un quatrième sous -code d'identification alphanumérique pour identifier au moins une cinquième sous-section de ladite cinquième section (MOV) des commandes de mouvement de l'état actuel ou de l'état suivant.

35. Procédé selon l'une quelconque des revendications 32 à 34, **caractérisé en ce que** au moins une cinquième sous - section de la cinquième section (MOV) des commandes de mouvement est vide.

36. Procédé selon l'une quelconque des revendications 28 à 35, **caractérisé en ce que** ledit réseau de télécommunication est le réseau Internet.

37. Procédé selon l'une quelconque des revendications 14 à 18 ou selon l'une quelconque des revendications 22 à 27, **caractérisé en ce que** ledit fichier de visualisation et ledit fichier de configuration vocale sont stockés dans un serveur, accessible au moyen d'un réseau téléphonique depuis au moins un appareil téléphonique utilisateur, ledit serveur étant équipé d'au moins une machine de synthèse vocale et d'une machine de reconnaissance vocale, ledit appareil téléphonique utilisateur étant équipé dudit microphone ainsi que d'un moyen de reproduction sonore pour reproduire les textes tels que synthétisés vocalement par ladite machine de synthèse vocale.

38. Procédé selon la revendication 37, **caractérisé en ce que** ledit réseau téléphonique est un réseau de radiotéléphonie cellulaire et **en ce que** ledit appareil téléphonique utilisateur est un appareil téléphonique cellulaire.

39. Procédé pour permettre une interaction vocale d'un site Web, comprenant une ou plusieurs pages Web, la visualisation de chaque page Web étant définie par un fichier de visualisation correspondant, le procédé étant **caractérisé par** l'exécution, par rapport à au moins une page dudit site Web, du procédé pour permettre l'interaction vocale d'une page Web selon l'une quelconque des revendications précédentes 1 à 27.

40. Procédé selon la revendication 39, **caractérisé en ce que** les fichiers de visualisation et les fichiers de configuration vocale des pages Web du site sont stockés dans un serveur, accessible au moyen d'un réseau de télécommunication depuis au moins un client utilisateur, et **en ce que** le procédé exécute, par rapport à au moins une page dudit site Web, le procédé pour permettre l'interaction vocale d'une page Web selon l'une quelconque des revendications précédentes 28 à 36.

41. Procédé selon la revendication 40, **caractérisé en ce qu'**il comprend en outre avant ladite étape A0.3, l'étape suivante :
A0.0 - vérifier si un fichier de configuration vocale de la page Web demandée existe,
le procédé exécutant les étapes des étapes du procédé pour permettre l'interaction voc ale d'une page Web seulement si le résultat de ladite étape de vérification A0.0 est positif.

42. Procédé selon la revendication 41, **caractérisé en ce que**, si le résultat de ladite étape de vérification A0.0 est négatif, le procédé exécute l'étape suivante :
F3 - signaler par l'intermédiaire dudit client que la page Web demandée n'est pas activée pour une interaction vocale.

43. Procédé selon la revendication 42, **caractérisé en ce que** ladite étape F3 consiste en la synthèse vocale d'un message exécutée par la machine de synthèse vocale.

44. Procédé selon la revendication 39, **caractérisé en ce que** les fichiers de visualisation et les fichiers de configuration vocale des pages Web du site concerné sont stockés dans un serveur, accessible au moyen d'un réseau téléphonique depuis au moins un appareil téléphonique utilisateur, et **en ce que** le procédé exécute, par rapport à au moins une page dudit site Web, le procédé pour permettre l'interaction vocale d'une page Web selon la revendication 37 ou 38.

45. Ordinateur possédant un ou plusieurs fichiers de visualisation de pages Web stockés sur celui -ci, **caractérisé en ce qu'**il possède également stocké, pour au moins une page Web par rapport à laquelle il possède le fichier de visualisation associé stocké, un fichier de configuration vocale correspondant adapté pour permettre l'interaction vocale d'une page Web selon le procédé pour permettre l'interaction vocale d'une page Web selon l'une quelconque des revendications précédentes 1 à 27.

46. Ordinateur selon la revendication 45, **caractérisé en ce qu'**il possède stockés les fichiers de configuration vocale de pages Web appartenant à un seul site Web selon la même structure de données par laquelle les fichiers de visualisation de la page Web du site concerné sont stockés.

47. Ordinateur selon la revendication 45 ou 46, **caractérisé en ce qu'**il est un serveur, accessible par l'intermédiaire d'un réseau de communication depuis au moins un client utilisateur demandant une page Web dont le fichier de visualisation est stocké dans ledit serveur, et **caractérisé en outre en ce qu'**il est adapté, en réponse à un client demandant une page Web dont le fichier de visualisation correspondant est stocké dans celui-ci, pour exécuter ladite étape A0.3 selon le procédé pour permettre l' interaction vocale d'une page Web selon l'une quelconque des revendications 28 à 36.

48. Ordinateur utilisateur ou client équipé d'un microphone et d'une machine de synthèse vocale, adapté pour accéder à un serveur selon la revendication 47 par l'intermédiaire d'un réseau de télécommunication afin de demander une page Web dont le fichier de configuration vocale correspondant est stocké dans ledit serveur, **caractérisé en ce qu'**il est adapté pour recevoir le fichier de configuration vocale de la page Web demandée et qu'il est adapté pour exécuter lesdites étapes A0.2, A1, B1, C1, D1, E1 et F2 du procédé pour permettre l'interaction vocale d'une page Web selon l'une quelconque des revendications 28 à 36.

49. Ordinateur utilisateur ou client selon la revendication 48, **caractérisé en ce qu'**il est en outre adapté pour exécuter ladite étape F1 du procédé pour permettre l'interaction vocale d'une page Web selon la revendication 2.

50. Ordinateur utilisateur ou client selon la revendication 48 ou 49, **caractérisé en ce qu'**il est en outre adapté pour exécuter ladite étape A2 du procédé pour permettre l'interaction vocale d'une page Web selon la revendication 4.

51. Ordinateur utilisateur ou client selon l'une quelconque des revendications 48 à 50, **caractérisé en ce qu'**il est en outre adapté pour exécuter ladite étape C2 du procédé pour permettre l'interaction vocale d'une page Web selon la revendication 8.

52. Ordinateur utilisateur ou client selon l'une quelconque des revendications 48 à 51, **caractérisé en ce qu'**il est en outre adapté pour exécuter ladite étape B2 du procédé pour permettre l'interaction vocale d'une page Web selon la revendication 14.

53. Ordinateur utilisateur ou client selon la revendication 52, **caractérisé en ce qu'**il est en outre adapté pour exécuter ladite étape B3 du procédé pour permettre l'interaction vocale d'une page Web selon la revendication 16.

54. Ordinateur utilisateur ou client selon l'une quelconque des revendications 48 à 53, **caractérisé en ce qu'**il est en outre adapté pour exécute r ladite étape B4 du procédé pour permettre l'interaction vocale d'une page Web selon la revendication 29.

55. Ordinateur selon la revendication 45 ou 46, **caractérisé en ce qu'**il est un serveur, accessible par l'intermédiaire d'un réseau téléphonique, depuis au moins un appareil téléphonique utilisateur, **en ce qu'**il est équipé d'une machine de synthèse vocale et d'une machine de reconnaissance vocale, et **caractérisé en outre en ce qu'**il est adapté pour exécuter les étapes du procédé pour permettre l'interaction vocale d'une page Web selon la revendication 37 ou 38.

56. Signal électrique, magnétique ou électromagnétique **caractérisé en ce qu'**il comprend au moins un fichier de configuration vocale d'une page Web adapté pour permettre l'interaction vocale de la page Web selon le procédé pour permettre l'interaction vocale d'une page Web selon l'une quelconque des revendications 1 à 27.

57. Signal électrique, magnétique ou électromagnétique selon la revendication 56, **caractérisé en ce que** ledit au moins un fichier de configuration vocale d'une page Web est adapté pour permettre l'interaction vocale d'une page Web selon le procédé pour permettre l'interaction vocale d'une page Web selon l'une quelconque des revendications 29 à 35.

58. Support de stockage lisible par un ordinateur, **caractérisé en ce qu'**il comprend au moins un fichier de configuration vocale d'une page Web adapté pour permettre l'interaction vocale de la page Web selon le procédé pour permettre l'interaction vocale d'une page Web selon l'une quelconque des revendications 1 à 27.

59. Support de stockage selon la revendication 58, **caractérisé en ce que** ledit au moins un fichier de configuration vocale d'une page Web est adapté pour permettre l'interaction vocale de la page Web selon le procédé pour permettre l'interaction vocale d'une page Web selon l'une quelconque des revendications 29 à 35.

60. Support de stockage selon la revendication 58 ou 59, **caractérisé en ce qu'**il possède stockés les fichiers de configuration vocale des pages Web appartenant à un seul site Web selon la même structure de données par laquelle les fichiers de visualisation de la page Web du site concerné sont stockés.

61. Programme informatique **caractérisé en ce qu'**il comprend des moyens de code adaptés pour exécuter, lorsqu'ils sont lancés sur un ordinateur, ladite étape A0.3 du procédé pour permettre l'interaction vocale d'une page Web selon l'une quelconque des revendications 28 à 36.

62. Support de stockage lisible par un ordinateur possédant un programme stocké sur celui -ci, **caractérisé en ce que** ledit programme est un programme informatique selon la revendication 61.

63. Programme informatique **caractérisé en ce qu'**il comprend des moyens de code adaptés pour exécuter, lorsqu'ils sont lancés sur un ordinateur, lesdites étapes A0.2, A1, B1, C1, D1, E1 et F2 du procédé pour permettre l'interaction vocale d'une page Web selon l'une quelconque des revendications 28 à 36.

64. Programme informatique selon la revendication 63,
**caractérisé en ce qu'**il comprend en outre des moyens d e code adaptés pour exécuter, lorsqu'ils sont lancés sur un ordinateur, ladite étape F1 du procédé pour permettre l'interaction vocale d'une page Web selon la revendication 2.

65. Programme informatique selon la revendication 63 ou 64, **caractérisé en ce qu'**il est en outre adapté pour exécuter ladite étape A2 du procédé pour permettre l'interaction vocale d'une page Web selon la revendication 4.

66. Programme informatique selon l'une quelconque des revendications 63 à 65, **caractérisé en ce qu'**il est en outre adapté pour exécuter ladite étape C2 du procédé pour permettre l'interaction vocale d'une page Web selon la revendication 8.

67. Programme informatique selon l'une quelconque des revendications 63 à 66, **caractérisé en ce qu'**il est en outre adapté pour exécuter ladite étape B2 du procédé pour permettre l'interaction vocale d'une page Web selon la revendication 14.

68. Programme informatique selon la revendication 67, **caractérisé en ce qu'**il est en outre adapté pour exécuter ladite étape B3 du procédé pour permettre l'interaction vocale d'une page Web selon la revendication 16.

69. Programme informatique selon l'une quelconque des revendications 63 à 68, **caractérisé en ce qu'**il est en outre adapté pour exécuter ladite étape B4 du procédé pour permettre l'interaction vocale d'une page Web selon la revendication 29.

70. Support de stockage lisible par un ordinateur possédant un programme stocké sur celui -ci, **caractérisé en ce que** ledit programme est un programme informatique selon l'une quelconque des revendications 63 à 69.

71. Programme informatique **caractérisé en ce qu'**il comprend des moyens de code adaptés pour exécuter, lorsqu'ils sont lancés sur un ordinateur, les étapes du procédé pour permettre l'interaction vocale d'une page Web selon la revendication 37 ou 38.

72. Support de stockage lisible par un ordinateur possédant un programme stocké sur celui -ci, **caractérisé en ce que** ledit programme est un programme informatique selon la revendication 71.
